## Europäisches Patentamt
## European Patent Office
## Office européen des brevets

(19)

(11) Numéro de publication: **0 059 293**
**B1**

(12) # FASCICULE DE BREVET EUROPEEN

(45) Date de publication du fascicule du brevet:
03.07.85

(51) Int. Cl.⁴: **G 06 F 9/46**

(21) Numéro de dépôt: **81430003.4**

(22) Date de dépôt: **27.02.81**

(54) Procédé et dispositif pour l'attribution sélective de ressources d'une unité de commande à un parmi plusieurs utilisateurs.

(43) Date de publication de la demande:
08.09.82 Bulletin 82/36

(45) Mention de la délivrance du brevet:
03.07.85 Bulletin 85/27

(84) Etats contractants désignés:
BE CH DE FR GB IT LI NL SE

(56) Documents cités:
GB - A - 2 009 981
US - A - 3 689 895
US - A - 4 001 784

(73) Titulaire: **International Business Machines Corporation, Old Orchard Road, Armonk, N.Y. 10504 (US)**

(72) Inventeur: **Lechaczynski, Michel, 17, Avenue Georges Clémenceau, F-06000 Nice (FR)**
Inventeur: **Pauporte, André, Lotissement du Colombier, F-06480 La Colle sur Loup (FR)**
Inventeur: **Thery, Pierre Henry, Villa Sunny Land Allée Venet, F-06160 Juan Les Pins (FR)**
Inventeur: **Waller, Richard, 205 Bennington Dr., Chapel Hill North Carolina (US)**

(74) Mandataire: **Lattard, Nicole, Compagnie IBM France Département de Propriété Industrielle, F-06610 La Gaude (FR)**

## Description

Domaine technique

La présente invention concerne un procédé utilisable dans une unité de commande centrale destinée à un contrôleur de communications ou à un ordinateur, pour gérer les différentes tâches à effectuer par l'unité de commande centrale et un dispositif pour mettre en œuvre ledit procédé.

L'unité de commande centrale d'un système de traitement de données, tel qu'un contrôleur de communications ou ordinateur, est un élément qui comporte des ressources destinées à effectuer différentes tâches. Ces ressources sont à la disposition de plusieurs dispositifs utilisateurs dans le système pour effectuer à la demande de ces dispositifs, les taches nécessaires pour le traitement des données. Dans un tel environnement la présente invention concerne un procédé et un dispositif pour affecter les différentes tâches à réaliser par des ressources de l'unité de commande centrale suivant une organisation par priorités et un principe de partage du temps entre les dispositifs utilisateurs réalisant les opérations les plus longues.

Art antérieur

Dans le domaine des systèmes de traitement de données, il est connu d'attribuer des priorités aux demandes de service, aux demandes d'interruption de programmes faites par des périphériques à l'unité de commande centrale. Par exemple, dans la publication IBM Technical Disclosure Bulletin, Vol. 19, No. 11, avril 1977, pages 4354–4356 est décrit un système de traitement de données comportant une unité de traitement centrale à laquelle sont connectés des dispositifs d'entrée/sortie par un bus. Pour contrôler le transfert des données, l'unité de traitement centrale exécute des instructions contenues dans une mémoire. Il y a deux types de dispositifs d'entrée/sortie: pour les uns les transferts de données sont contrôlés par programme et sont servis suite à une demande d'interruption, les autres attachés au bus d'entrée/sortie par un contrôleur microprogrammé sont servis par vol de cycle. Dans ce système, des moyens sont prévus pour que les signaux de demande de vol de cycle émanant d'un dispositif fonctionnant dans ce mode soient sélectionnés suivant un ordre de priorité et aient priorité sur les demandes d'interruption aux différents niveaux possibles dans l'unité de traitement centrale exception faite des demandes d'interruption pour causes d'erreurs. Ce dispositif ne concerne donc que l'attribution de priorités à des dispositifs d'entrée/sortie.

Or dans une unité de commande centrale d'un contrôleur de communications ou un ordinateur, de nombreux utilisateurs peuvent nécessiter qu'il leur soit affecté une ressource primordiale intervenant dans l'exécution de pratiquement toutes les tâches avec les unités d'entrée/sortie considérées comme utilisateurs externes ou avec d'autres utilisateurs internes à l'unité. Par exemple, tous ces utilisateurs doivent avoir accès à la mémoire morte contenant les mots de commande nécessaires à l'exécution des opérations de l'unité de commande contrôlées par les instructions du programme emmagasinées dans la mémoire principale.

En conséquence dans le cas où les utilisateurs sont nombreux et où certains ont à effectuer des tâches très longues on ne peut pas attribuer l'accès à cette ressource sur une base de priorité uniquement, car une fois la mémoire affectée à un utilisateur ayant à réaliser une tâche très longue, elle resterait non disponible trop longtemps pour les autres utilisateurs.

Une solution à ce problème consisterait à prévoir plusieurs ressources qui peuvent être affectées en parallèle à plusieurs utilisateurs. Mais cette solution n'est en fait pas rentable car ces ressources resteraient quand même souvent inutilisées. Le brevet US-4 001 784 décrit un système de traitement de données ayant plusieurs canaux d'entrée/sortie auxquels sont connectées des unités d'entrée/sortie, dans lequel est incorporé un mécanisme particulier de traitement des demandes d'interruptions émanant des unités d'entrée/sortie. Le comportement du système est cyclique de sorte qu'il y a des services qui ne sont pas interruptibles à savoir ceux nécessitant pour leur exécution les ressources du système pendant un seul cycle et des services interruptibles à savoir ceux nécessitant pour leur exécution, les ressources du système pendant plusieurs cycles, l'interruption desdits services nécessitant des ressources pour conserver l'état du service interrompu afin de pouvoir reprendre son exécution.

Dans ce système, chaque canal a des ressources permettant l'exécution de certains services et l'unité de traitement fournit des ressources physiques affectées spécifiquement à des classes de services et qui peuvent être attribuées à un quelconque des canaux. Chacune des ces ressources avec les ressources du canal permet d'exécuter la classe de services associés. Ceci permet l'exécution simultanée de plusieurs services dans certaines conditions.

Les demandes d'interruption émanant des canaux ont des priorités et sont sélectionnées en fonction de leur priorité. Si le service en cours d'exécution peut être interrompu, son exécution est stoppée pour exécuter le service plus prioritaire.

Le mécanisme d'interruption dont il est question dans ce document implique la suspension temporaire de l'exécution d'une séquence de contrôle pour en exécuter une autre plus prioritaire, associée à la possibilité de reprise de la séquence interrompue. Ceci nécessite la sauvegarde d'une quantité importante d'information et donc des ressources adéquates, de sorte que le coût ne se justifie que pour résoudre le problème du traitement des interruptions dans les systèmes complexes.

La présente invention est relative non pas aux traitements des interruptions, mais à un mécanisme permettant d'attribuer une ressource commune par exemple la mémoire d'un système de traitement de données à un utilisateur sélectionné dans le cas où ces utilisateurs sont hétérogènes, c'est-à-dire peuvent être classés en plusieurs catégories à savoir utilisateurs internes et externes, les utilisateurs externes ayant ceci de particulier qu'ils peuvent être, suivant le cas, une ressource utilisée par un utilisateur interne pour le traitement d'une instruction particulière ou être un utilisateur devant avoir accès à la ressource commune lors de la réalisation de certains types d'opérations. Ces deux modes de travail sont donc en contention.

Résumé de la présente invention

Un objet de la présente invention est donc de réaliser un procédé et un dispositif le mettant en œuvre permettant d'attribuer une ressource commune dans un contrôleur de communications ou un système de traitement de données, lorsqu'il y a contention entre les utilisateurs internes et externes de ladite ressource, procédé et dispositif ne nécessitant que des moyens simples et peu coûteux.

Le procédé conforme à la présente invention, telle qu'elle est caractérisée, permet d'attribuer au moins une ressource commune d'une unité de commande centrale à programme emmagasiné exécutant les instructions du programme par cycles, à plusieurs utilisateurs internes à l'unité ou utilisateurs d'entrée/sortie externes auxquels sont connectés des adaptateurs permettant à des dispositifs d'entrée/sortie de communiquer avec l'unité de commande centrale. Les utilisateurs peuvent communiquer par des opérations d'entrée/sortie initialisées par programme ou par des opérations initialisées par les adaptateurs. Les tâches à effectuer par les utilisateurs internes nécessitant moins de cycles de l'unité de commande que les tâches des utilisateurs externes. Le procédé consiste à affecter à tous les utilisateurs internes et externes un ordre de priorité suivant lequel les appels à l'utilisation de la ressource seront traités, à recevoir tous les appels à l'utilisation de la ressource par un des utilisateurs et à générer un signal de sélection permettant d'attribuer la ressource commune à un des utilisateurs sélectionné en fonction de sa priorité. Dans le cas où l'appel sélectionné devrait permettre l'accès de la ressource à un utilisateur interne communiquant par une opération initialisée par programme et que cet appel ne peut être servi car il nécessite d'avoir accès à un utilisateur externe pris comme ressource, alors occupé, l'appel est enregistré et donc mis en attente et, il n'est traité que lorsque cet utilisateur externe devient libre de façon que d'autres utilisateurs puissent être sélectionnés et servis pendant ce temps. Lorsque l'appel sélectionné est destiné à permettre l'accès à un utilisateur externe communiquant avec l'unité centrale par une opération initialisée par un dispositif d'entrée/sortie généralement en vol de cycle, un cycle de l'unité est affecté à cet utilisateur pour le transfert des données, l'utilisateur restant ensuite occupé pendant plusieurs cycles pour permettre l'achèvement de l'opération, et ne pouvant donc plus être sélectionné pendant ce temps, au cours duquel d'autres appels peuvent être sélectionnés.

Le dispositif de la présente invention comporte des moyens pour effectuer les différentes étapes du procédé d'attribution.

L'invention est exposée ci-après plus en détail à l'aide des dessins représentant seulement un mode de réalisation préféré de celle-ci.

Brève description des dessins

La figure 1 représente le schéma global d'un contrôleur de communications.

La figure 2 représente le schéma de circulation des données d'une unité de commande centrale du contrôleur de communication du type représenté sur la figure 1, dans laquelle peut être appliquée la présente invention.

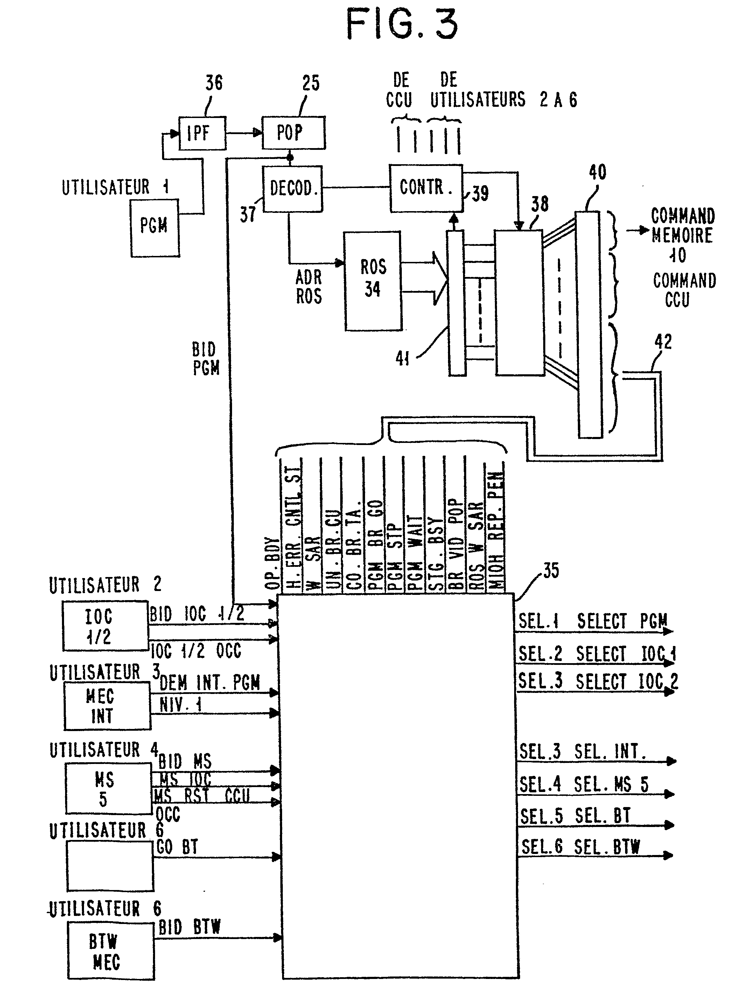

La figure 3 représente un schéma général montrant comment peut être mis en œuvre le procédé de l'invention.

La figure 4 représente le déroulement d'une succession d'instructions et les opérations qui se passent lorsqu'un appel d'un utilisateur par une opération AIO est sélectionné.

La figure 5 représente le déroulement d'une succession d'instructions et les différentes opérations qui se passent lorsqu'un appel d'un utilisateur pour une opération d'entrée/sortie est sélectionné et que cet appel est mis en attente.

La figure 6 représente le déroulement d'une succession d'instructions et les différentes opérations qui se passent lorsqu'un appel d'un utilisateur pour une opération d'entrée/sortie est sélectionné.

La figure 7 représente le symbolisme qui sera utilisé dans les figures 8 à 12 et la représentation logique correspondante.

La figure 8 représente le circuit 50 pour la génération de signaux de sélection à l'exception de ceux concernant les interfaces IOC1 et IOC2.

La figure 9 représente le circuit 60 pour la génération du signal de sélection de l'interface IOC1.

La figure 10 représente le circuit 70 pour la génération du signal de sélection de l'interface IOC2.

La figure 11 représente le circuit 80 pour la génération de l'information d'état PIO.

La figure 12 représente le circuit 90 pour la génération de l'indicateur d'utilisateur CCUI.

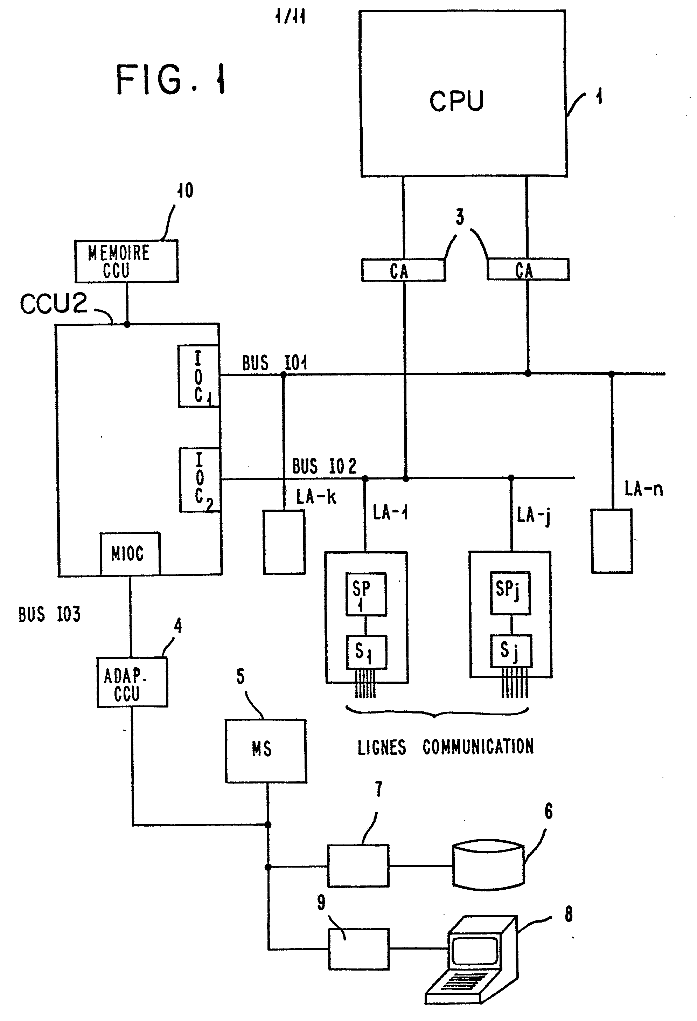

En référence à la figure 1, on va décrire un contrôleur de communications pour montrer une application de la présente invention. Le contrôleur de communications contrôle l'échange de données entre des terminaux connectés aux lignes de communications et un système de traitement central CPU1, qui peut être un ordinateur du type IBM 370.

Pour qu'un échange ait lieu dans le sens terminaux, vers système central CPU, le contrôleur a pour fonction de balayer les lignes de communication, de multiplexer les données arrivant sur ces lignes et de transmettre le train de données ainsi obtenu au système central par un canal grande vitesse.

Pour qu'un échange ait lieu dans le sens système central vers terminaux, le contrôleur reçoit les données multiplexées à transmettre à partir du système central sur un canal à grande vitesse, démultiplexe les données et les achemine aux terminaux désirés désignés par adressage.

Comme on peut le voir sur la figure 1, le contrôleur comprend une unité de commande centrale CCU2, qui est du même type que celle utilisée dans le contrôleur de communication IBM 3705. Cette unité de commande est un processeur qui fonctionne sous commande d'un programme de contrôle de réseau, à plusieurs niveaux d'interruption. Chaque événement lorsqu'il se produit crée une interruption à un niveau donné du programme, qui fait que le code de traitement de l'événement se déroule. L'unité de commande CCU est associée à une mémoire principale 10 et à des interfaces de commande d'entrée/sortie IOC1, IOC2 et MIOC.

Aux deux premières interfaces IOC1 et IOC2 sont attachés deux bus d'entrée/sortie, BUS IO1 et BUS IO2. Le système de traitement central est connecté aux bus IO1 et IO2 par un adaptateur de canaux CA, 3.

Des adapteurs de lignes LA-1 à LA-n sont connectés en parallèle aux bus d'entrée/sortie BUS IO1 et BUS IO2. Chaque adaptateur de lignes assure le balayage d'une partie des lignes de communications à gérer par le contrôleur. En conséquence, le nombre des adapteurs varie suivant la configuration du réseau.

Chaque adaptateur de ligne comporte un dispositif de balayage S proprement dit, qui comporte des mémoires dans lesquelles sont stockées les données reçues ou à transmettre et un microprocesseur préprogrammé SP qui permet de décharger l'unité de commande centrale de certaines fonctions, fonctions qui concernent notamment le traitement des données sur les lignes connectées à l'adapteur de lignes associé.

A l'autre interface MIOC est connecté un bus d'entrée/sortie BUS IO3. A ce bus est attaché par l'intermédiaire d'un adaptateur 4, un système de maintenance MS 5. Ce système de maintenance et de service est aussi un processeur avec un microcode de commande. Il est connecté à une unité à disque 6 par un adaptateur 7 associé et à une console 8 comportant un écran d'affichage et un clavier par un adaptateur associé 9. La console est un terminal qui peut être du type 3101.

Ce système de maintenance et de service a trois fonctions. Il permet à l'opérateur de surveiller le contrôleur en contrôlant et analysant les actions effectuées et faciliter le dépannage en permettant l'isolement et la réparation des erreurs de programmation et des pannes à la fois dans le contrôleur et le système de maintenance lui-même. De plus il est utilisé pour exécuter des services notamment le chargement des programmes IPL, la lecture et l'écriture de registres, etc. Pour ce faire, le programme de commande du réseau dans l'unité CCU comporte des procédures de récupération après erreur qui permettent au contrôleur de ne pas être affecté par les erreurs physiques ou les erreurs de transmission intermittentes. Ces procédures sont exécutées automatiquement lorsqu'une erreur de transmission se produit. Si elles ne permettent pas au contrôleur de se rétablir le programme reporte une condition d'erreur. Le système de maintenance rassemble les enregistrements des erreurs se produisant dans le contrôleur et les transmet au système central sous forme de messages d'alerte. Le système central prend en compte chaque message d'alerte pour trouver la stratégie applicable à la détermination du problème.

De plus des routines de diagnostic sont à la disposition du personnel de maintenance pour trouver les pannes. Ces routines résident dans le fichier de l'unité à disque et peuvent en conséquence être appelées même si le système central, le canal ou le contrôleur est en panne.

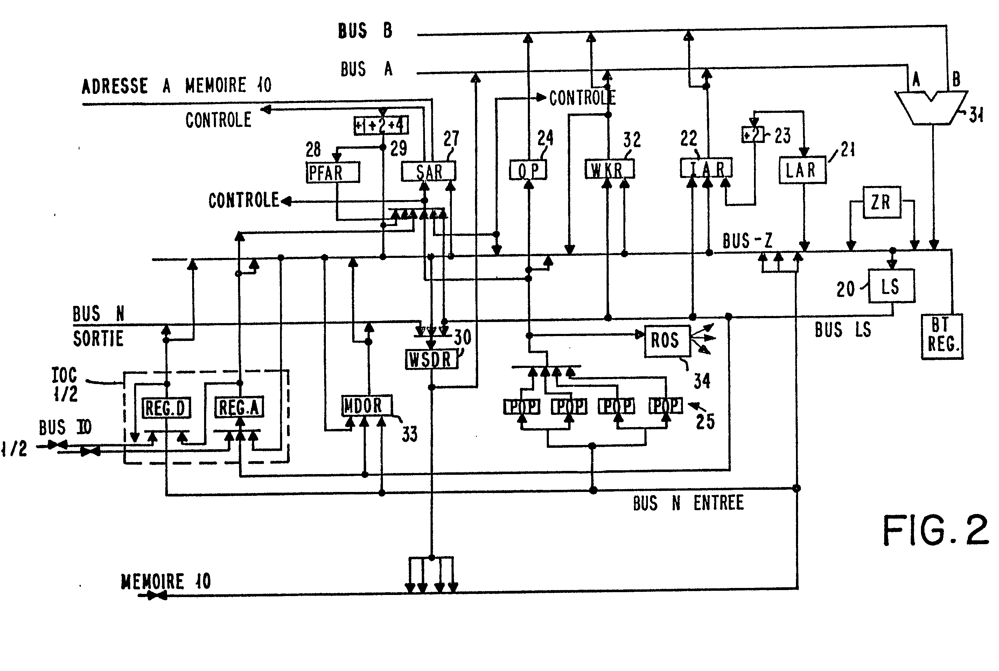

On va maintenant décrire en référence à la figure 2, le schéma de circulation des données d'une unité de contrôle afin de montrer les différentes ressources à partager par différents utilisateurs conformément à la présente invention. Cette unité de commande comprend les circuits et les chemins de données qui permettent d'exécuter un jeu d'instructions constitué par les cinquante et une instructions du contrôleur IBM 3705 auxquelles ont été ajoutées deux instructions supplémentaires qui seront données ultérieurement. De plus, ils permettent d'adresser la mémoire, de réaliser le traitement logique et arithmétique des données et de commander les adapteurs qui sont attachés à cette unité.

Cette unité comprend une mémoire locale 20 dans laquelle sont définis à des positions d'adresses données, quarante registres généraux utilisés par le programme de contrôle pour l'exécution des instructions et le traitement de données. Ces registres sont répartis en cinq groupes de huit registres. Chaque groupe est affecté à un niveau de programme parmi les cinq niveaux de programme. Ceci permet au programme à un niveau d'être interrompu à un autre niveau sans qu'il soit nécessaire de sauver le contenu des registres.

Elle comporte de plus des registres externes qui sont utilisés pour emmagasiner des informations nécessaires pour la communication entre le programme de commande et les circuits proprement dits. Ces registres externes contiennent de l'information intéressant le fonctionnement des circuits et/ou du programme. En utilisant une instruction d'entrée le programme de commande peut charger le contenu d'un registre externe dans un registre général où il peut opérer sur les données. Des instructions de sortie permettent de charger un registre externe avec le contenu du registre général déterminé par l'instruction. Ces registres sont les suivants:

Un registre d'adresse antérieur LAR 21 qui contient l'adresse de la dernière instruction exécutée avant l'instruction en cours d'exécution. Ce registre LAR 21 est chargé à partir du registre d'adresse d'instructions IAR 22 au début de l'exécution de chaque instruction. Un incrémenteur 23 permet de faire passer le registre IAR à une valeur pointant sur l'adresse suivante.

Un registre d'opération OP, 24, est utilisé pour stocker les seize premiers bits ($1/2$ mot) de l'instruction en cours d'exécution. Ce registre est chargé à partir de quatre registres de «recherche à l'avance» POP A-B 25 qui permettent de rechercher les instructions dans la mémoire principale connectée à l'unité de commande par un interface.

Il comprend un registre d'adresse de mémoire SAR 27 (22 bits données + 3 parités), un registre d'adresse d'instructions recherchées à l'avance PFAR 28 avec un incrémenteur d'adresses, un registre d'écriture de données en mémoires WSDR 30. Une unité arithmétique et logique 31 permet d'effectuer les opérations arithmétiques et logiques commandées par le programme, cette unité étant associée à des registres de travail WKR 32. Le registre ZR permet de stocker les données sur le bus Z.

L'interface MIOC communique avec l'unité CCU par un registre MDOR 33 de données de maintenance.

Les interfaces IOC 1/2 comprennent deux registres: Un registre D, à 18 bits (16 bits information + 2 bits parité). C'est un registre tampon permettant l'échange de toutes les adresses, commandes et données de et vers les adaptateurs, un registre A à 25 bits (22 bits d'information + 3 bits de parité).

La mémoire morte 34 contient des mots de commande CW qui sont nécessaires pour contrôler les opérations à réaliser par l'unité de commande.

Cette unité étant du même type que celle du contrôleur de communication IBM 3705, ne sera pas décrite plus en détail. Le chemin des données dépend du déroulement des instructions du programme en mémoire principale.

Les deux instructions qui ont été ajoutées au jeu d'instruction du contrôleur IBM 3705 sont les suivantes:

la première de ces instructions est une instruction d'entrée/sortie adapteur IOH du type RR (registre à registre) de format suivant:

| 0 | R2 | 0 | R1 | X «50» |
|---|----|---|----|--------|
| 0 | 1  3 | 4 | 5  7 | 8                    15 |

Cette instruction provoque le transfert du contenu du registre déterminé par le champ R1 à un adapteur, canal ou ligne déterminé par le contenu du champ R2 ou vice-versa. Cette instruction est exécutable aux niveaux de programme 1, 2, 3 et 4 seulement. Si on essaie de l'exécuter au niveau 5, il en résultera une demande d'interruption au niveau 1. Si le processeur ne reçoit pas de réponse valide à l'intérieur d'un temps prédéterminé, une interruption de niveau 1 «NON REPONSE ADAPTATEUR» se produit. Les registres de l'unité de commande ne sont pas adressables par cette instruction. X «50» signifie que 50 est un nombre hexadécimal.

La seconde de ces instructions est une instruction d'entrée/sortie valeur immédiate IOH du type RA, de format suivant:

| 00000 | R1 | X «70» | |
|-------|----|--------|--|
| 0                4 | 5      7 | 8                    15 | 16      31 |

Cette instruction transfère le contenu du registre déterminé par R1 à un registre externe ou vice-versa. Le registre de l'adapteur externe est déterminé par le contenu du second demi mot de l'instruction. Cette instruction peut être utilisé pour adresser les adapteurs de canaux, de ligne.

Le système de maintenance MS 5 est accédé par une instruction du même type MIOH. Cette instruction au lieu d'utiliser les registres A et B de l'interface IOC, utilise le registre MDOR pour les données et un registre LSAR dans la mémoire locale pour les informations d'adresse.

Dans l'unité de commande centrale la mémoire morte ROS contrôle tous les composants: unité logique et arithmétique, registres, accès à la mémoire locale ou à la mémoire principale. En conséquence, l'affectation de cette mémoire morte à l'un des dispositifs utilisateurs entraîne l'attribution de toutes les ressources de l'unité de commande à cet utilisateur. En effet, l'unité de commande fonctionne sous contrôle du programme emmagasiné dans la mémoire principale 10. Lors de l'exécution d'une instruction, le décodage du code opération de l'instruction provoque l'adressage d'un ou plusieurs mots de commande stockés dans la mémoire morte, qui contrôlent le fonctionnement des différents composants.

Sur la figure 2 est illustré de façon très générale comment le procédé de la présente invention peut être mis en œuvre. A partir des appels BID émis par les différents utilisateurs, le dispositif mettant en œuvre le procédé d'attribution permet de générer des signaux de sélection pour affecter la mémoire à l'utilisateur sélectionné, sur une base de priorité et de partage du temps entre les utilisateurs réalisant des opérations longues.

L'utilisateur 1 est le programme PGM dans la mémoire principale qui envoie au dispositif de sélection 35 un signal d'appel BID PGM suite au chargement des registres POP 25.

L'utilisateur 2 est constitué par les interfaces IOC 1 et 2. Cet utilisateur permet aux adapteurs de communiquer avec l'unité de contrôle par deux types d'opérations: AIO d'une part, opération déclenchée par l'adapteur et PIO d'autre part, opération déclenchée par le programme utilisant les instructions IOH et IOHI. Ces opérations seront détaillées par la suite. Deux signaux sont fournis au dispositif 32, à savoir un signal d'appel IOC 1/2 et un signal indiquant que l'interface est occupée. IOC 1/2 OCC.

Cet utilisateur a ceci de particulier qu'il peut suivant le cas:

1. Etre une ressource utilisée par le programme lorsque l'instruction est instruction d'entrée/sortie IOH (PIO).

2. Etre un utilisateur accédant à des ressources internes de l'unité centrale (mémoire, ROS), lors d'opérations initialisées par un adaptateur d'entrée/sortie (AIO).

Ces deux modes de travail sont en contention sous contrôle du mécanisme de l'invention.

L'utilisateur 3 est le mécanisme d'interruption MEC. INT. permettant de quitter un niveau de programme pour passer à un niveau de programme de priorité plus élevée. Ce mécanisme fournit deux indications au dispositif 35, un signal de demande d'interruption de programme DEM INT PGM, et un signal indiquant que les opérations se déroulent au niveau 1, NIV 1 et qu'en conséquence, toute demande d'interruption doit être sélectionnée.

L'utilisateur 4 est le système de maintenance MS 5 qui envoie un signal de demande proprement dit BID MS et deux autres signaux, un signal indiquant que le système MS demande une opération qui nécessite l'utilisation de l'interface IOC 1/2, MS IOC et un signal envoyé par le système de maintenance pour terminer une opération précédente dudit système dans l'unité de commande: MS RST CCU OCC.

L'utilisateur 5 est un mécanisme d'établissement d'une table de débranchement BT MEC qui permet de constituer en mémoire une table des adresses des débranchements faits par le programme de commande, il envoie un signal d'appel GO BT.

L'utilisateur 6 est un mécanisme de rebouclage de la table de débranchement BTW MEC qui permet de reboucler la table dans laquelle sont enregistrés les débranchements, à son début quand elle est pleine. Ce mécanisme envoie un signal d'appel BID BTW.

Pour que les différents appels puissent être sélectionnés par le dispositif 35 il faut aussi tenir compte de signaux de commande venant de l'unité de contrôle. Ces signaux sont les suivants:

«Limite opération» (OP BDY):

signal actif pendant le dernier cycle de toute opération de l'unité de commande.

«Arrêt commandé par erreur matériel» (H.ERR.CNT.ST.):

signal actif lorsqu'une erreur matérielle arrêtant l'unité de commande est rencontrée.

«Ecrire registre IAR» (W IAR):

signal actif lorsque le registre d'adresse d'instruction est écrit.

«Branchement conditionnel en cours» (UN BR CU):

signal actif lorsqu'un branchement conditionnel est en cours d'exécution.

«Branchement conditionnel pris» (CO BR TA):

Signal actif lorsqu'un branchement conditionnel est détecté.

«Branchement programme à faire» (PGM BR GO):

signal actif lorsqu'un branchement doit être réalisé.

«Programme Arrêt» (PGM STP):

signal actif lors d'un arrêt de programme.

«Programme Attente» (PGM WAIT):

le programme attend (pas d'interruption, et niveau 5 masqué).

«Mémoire Occupée» (STG BSY):

La mémoire est occupée par une opération CCU.

«Branchement, vider les registres POP» (BR. VID. POP):

signal actif pour vider les registres dans lesquels sont stockées les instructions à l'avance dans le cas d'un branchement.

«ROS écrire SAR» (ROS W. SAR):

signal actif lorsque le registre SAR est écrit.

«MIOH» réponse en attente MIOH REP PEN:

MIOH attend réponse adaptateur.

Ces signaux sont fournis par l'unité de commande de la façon suivante:

Le programme se trouve en mémoire principale, par un mécanisme de recherche d'instruction IPF 36, les instructions sont envoyées aux registres POP 25 (figure 2). L'instruction à exécuter est décodée, par le circuit de décodage d'instruction 37 pour générer une adresse de mot de commande dans la ROS: ADR.ROS, suite à l'adressage de la mémoire ROS, un mot de commande CW ROS à 108 bits est transféré dans le registre de sortie 41. Ce mot de commande est modifié par une logique 38 sous contrôle d'un circuit de contrôle 39 qui reçoit des indications de différents points de l'unité de commande (noté sur le bloc diagramme de circulation de données de la figure 2) et des autres utilisateurs pour engendrer un mot de commande machine dans le registre 40. Ce sont certains des bits de ce mot de commande machine, fournis sur le bus 42, qui sont utilisés par le mécanisme de priorité. Les autres étant utilisés pour la commande de la circulation des données et d'autres pour la commande de la mémoire.

Cette disposition qui est classique dans les processeurs, ne fait pas partie de l'invention, elle n'est rappelée brièvement que pour montrer comment le diapositif de la présente invention s'intègre dans l'ensemble CCU.

Les signaux de sélection sont générés par le dispositif de la présente invention qui sera décrit en détail par la suite. Les différents utilisateurs sont classés par priorités de la façon suivante:

Utilisateur 6:

priorité la plus élevée, en effet le rebouclage doit être possible immédiatement après qu'une condition de débranchement a été trouvée.

Utilisateur 5:

mécanisme d'établissement d'une table de débranchements, cet utilisateur doit avoir une priorité supérieur à celle du mécanisme d'interruption, l'utilisateur 3 et du programme utilisateur 1 qui peuvent provoquer des opérations résultant en des débranchements.

Utilisateur 4:

(système de maintenance) a une priorité supérieure à celle de l'utilisateur 1 (programme) de l'utilisateur 2 (interruption) et de l'utilisateur 3 (adaptateurs) car il doit maintenir une commande globale de l'unité CCU.

Utilisateur 3:

doit avoir une priorité supérieure à celle du programme (utilisateur 1).

Utilisateur 2:

(BUS IO1 et 2) doit avoir une priorité supérieure à celle du programme pour empêcher le débordement des adapteurs. La priorité entre les bus 1 et 2 est basée sur le concept suivant: le bus dernier servi a la priorité la plus basse.
Utilisateur 1:

programme.

De plus un partage du temps est prévu entre les utilisateurs réalisant des opérations longues. Dans le cas particulier de l'application de l'invention à l'unité de commande du type de celle de la figure 1, ces utilisateurs sont l'utilisateur 2: IOC 1/2 pour les opérations déclenchées par les adapteurs AIO et l'utilisateur 1 programme pour les opérations d'entrée/sortie IOH et IOHI.

Chaque signal de sélection lorsqu'il est actif permet à l'appel de l'utilisateur correspondant d'être sélectionné.

Le bus IO (1 ou 2) est un bus bidirectionnel pour les bits d'information: 18 bits (16 bits données + 2 bits parité) et unidirectionnel pour les étiquettes et contrôles nécessaires. Les signaux sur ce bus IO sont les suivants:

| Lignes du bus IO | | Sens | |
| --- | --- | --- | --- |
| | | CCU | Adapteur |
| Entrée Sortie | IO | $\longrightarrow$ | |
| Etiquette adresse | TA | $\longrightarrow$ | |
| Etiquette donnée | TD | $\longrightarrow$ | |
| Sortie Lecture/Ecriture | R/W | $\longrightarrow$ | |
| Arrêt | HALT | $\longrightarrow$ | |
| Restauration | RES | $\longrightarrow$ | |
| Vol de cycle accepté haut | CSGH | $\longrightarrow$ | |
| Vol de cycle accepté bas | CSGL | $\longrightarrow$ | |
| Demande vol de cycle haut | CSRH | $\longleftarrow$ | |
| Demande vol de cycle bas | CSRL | $\longleftarrow$ | |
| Multiplet valide | VB | $\longleftarrow$ | |
| Demi-mot valide | VH | $\longleftarrow$ | |
| Parité valide | PV | $\longleftarrow$ | |
| Demande d'interruption supprimé | IRR | $\longleftarrow$ | |
| Fin de chaîne | EOC | $\longleftarrow$ | |
| Modificateur | M | $\longleftarrow$ | |
| Multiplet de données 0 | B0 | $\longleftrightarrow$ | |
| Multiplet de données 1 | B1 | $\longleftrightarrow$ | |

On va maintenant décrire le déroulement des opérations résultant d'une instruction IOH ou IOHI.

Lorsqu'une instruction IOH ou IOHI est décodée, l'interface IOC est testée, si elle est trouvée libre le champ R2 pour l'instruction IOH ou I pour l'instruction IOHI est chargé dans le registre D et le champ R1 (champ de données est chargé dans le registre A dans le cas d'une opération d'écriture. Ensuite l'opération est démarrée et l'IOC est indiqué occupé.

L'IOC initialise cette opération du type PIO (opération initialisée par Programme) en mettant au niveau haut les signaux IO et Sortie. Tous les adapteurs attachés à ce bus doivent supprimer les demandes d'interruption qu'ils pouvaient être en train de présenter, doivent mettre au niveau haut la ligne IRR et doivent mettre au niveau bas la ligne VH.

L'interface IOC place le contenu du registre D sur le bus de données. Une fois qu'il reconnaît la fin du signal VH et après le temps de traitement interne, la ligne TA est excitée.

Tous les adapteurs qui reçoivent le signal TA examinent les bits d'adresse pour déterminer quel adapteur est adressé. L'adapteur sélectionné répond avec un signal VH. Lorsque l'interface IOC reçoit VH il termine TA et enlève le contenu du registre D du bus de données. Après avoir reconnu la fin de TA l'adapteur termine VH.

A ce moment dans la séquence IO, l'opération dépendra du type d'opération: lecture ou écriture.

Pour une opération d'écriture, CCU vers adapteur, l'interface IOC place le demi-mot de données du registre déterminé par R1 sur le bus de données. Après le temps de traitement interne l'IOC excite la ligne TD (étiquette données). Après avoir reconnu cette étiquette TD, l'adapteur excite VH (demi-mot valide). Lorsque l'IOC reconnaît VH il termine les signaux TD, IO et sortie R/W et enlève les données du bus de données. Une fois qu'il a reconnu la fin de TD, l'adapteur termine VH.

Pour une opération de lecture/adapteur vers CCU, l'IOC termine sortie R/W et excite TD. Lorsque l'adapteur reconnaît TD il place les données demandées sur le bus de données. Une fois que les données ont été placées avec une parité correcte, l'adapteur excite les lignes PV et VH. Après le temps de traitement interne suivant la reconnaissance de VH (la parité sera engendrée si la ligne de parité valide n'est pas excitée) l'IOC chargera les données dans le registre D et un APPEL ROS IOC (utilisateur 2) est fait à la logique du CCU pour charger les données dans le registre spécifié par R1.

Lorsque les données sont chargées dans le registre D, l'IOC termine TD.

Lorsque l'adapteur reconnaît la fin de TD il termine VH et PV et enlève les données du bus. Lorsque l'IOC reconnaît la fin de VH il termine ID.

La fin du signal IO fait que l'adapteur précédemment sélectionné ne l'est plus. Il s'ensuit que tous les adapteurs qui ont des demandes d'interruption en attente envoient leurs demandes et terminent leur signal IRR. Tout adapteur qui n'a pas de demande d'interruption en attente termine son signal IRR à la reconnaissance de la fin du signal IO. Tous les adapteurs excitent VH avant de terminer IRR.

Après avoir reconnu que IRR n'est plus excité et que VH est excité, l'IOC restaure le signal IOC occupé.

On va maintenant passer à la description d'une opération AIO.

Elle diffère de l'opération précédente en ce que le transfert des données est déclenché et contrôlé par l'adapteur et que plusieurs unités de données peuvent être transférées durant l'opération.

Un adapteur démarre une opération AIO en excitant la ligne CSR (demande vol de cycle). A la réception de CSR, l'IOC s'il n'est pas occupé amorce une opération IOC, et il se signale alors occupé et met au niveau haut la ligne IO. Tous les adapteurs répondent de la même façon que pour une opération PIO. Tous ceux qui reçoivent le signal IO excitent la ligne IRR, et tous ceux qui avaient précédemment placés les demandes d'interruption sur le bus de données les enlèvent et suppriment le signal VH. Le signal VH est aussi supprimé s'il n'y avait pas de demande d'interruption.

Lorsque l'IOC a identifié que tous les adapteurs ont supprimé leur signal VH, il excite la ligne CSG (vol de cycle accordé). Cette ligne relie par une boucle les adapteurs dans un ordre de priorité. Si deux adapteurs font une demande de vol de cycle en même temps, le premier adapteur dans la boucle recevra le signal CSG et empêchera sa propagation en aval dans la boucle.

Lorsqu'un adapteur demandeur, reçoit le signal CSG, il place un mot de commande de vol de cycle CSCW sur le bus de données et excite VH et PV. Il termine aussi CSR.

Après le temps de traitement interne suivant la reconnaissance de VH, l'IOC vérifie la parité du mot CSCW et termine l'opération AIO si la parité n'est pas correcte en envoyant le signal HALT.

A ce point de la séquence AIO, l'IOC peut prendre diverses actions suivant la valeur chargée dans le CSCW.

Le format du mot CSCW est le suivant:

Bits

| 0 | 1 | 2 | 3 | 4 | 5 | 6 | 7 | 8 | 9 | 10 11 12 13 14 | 15 |
|---|---|---|---|---|---|---|---|---|---|---|---|
| 0 | 0 | 0 | 0 | 0 | X | D/I | S/L | W/R | D | PN | H/L |

| Bits 0 à 1 | doivent être mis à zéro |
|---|---|
| Bit 2 | = 0 s'il s'agit d'un adapteur CA |
| | = 1 s'il s'agit d'un adapteur LA |
| Bits 3 et 4 | mis à zéro |
| Bit 5 | mis à 0 = CA |
| | mis à 1 = LA |
| Bit 6 | Direct/Intérêt (D/I). Une opération directe/indirecte amorce toujours un transfert et devient ensuite un transfert indirect. Ce bit est combiné avec le bit 9. |
| Bit 7 | Court/long (S/L), ce bit n'a une signification que si le bit 6 ou le bit 9 est à 1. |
| Bit 8 | Lecture/écriture (R/W). |
| Bit 9 | Direct (D) voir 6. |
| Bit 10 | 0 = pas de système MS, 1 = système MS. |
| Bits 11–14 | PN indication du pointeur si bit 5 = 0. |
| Bit 15 | Haut/bas (H/L) |

Les bits 5, 11, 12, 13, 14 peuvent être lus par le programme en utilisant une instruction d'entrée.
si D/I = 0 S/L = 0 D = 0.

L'IOC fait un appel à la mémoire ROS B ID IOC afin qu'un registre indicateur déterminé, indiqué par le mot CSCW soit chargé de la mémoire locale dans le registre A. Lorsque ce chargement est terminé l'opération indirecte peut commencer.
si D/I = 0 S/L = 0 D = 1

Dans ce cas le transfert des données se fait entre le registre indicateur (dans la mémoire locale dont l'adresse est spécifiée par le CSCW) et l'adapteur. L'opération directe peut commencer immédiatement
si D/I = 0 S/L = 1 D = 1

Cette configuration est traitée de la même façon par l'IOC que pour D/I = 1, S/L = 1, D = 1 sauf qu'un mot complet est échangé
si D/I = 1 S/L = 1 D = 0

Dans ce cas l'opération directe dure jusqu'à ce que deux demi-mots soient chargés dans le registre A et soient utilisés pour adresser la mémoire principale lorsqu'une opération indirecte est réalisée
si D/I = 1 S/L = 0 D = 0

Cette configuration est traitée de la même façon que pour D/I = 1, S/L = 1, D = 1 sauf qu'un demi-mot est transféré.

Le transfert des données par une opération AIO se fait sous contrôle de l'adapteur. L'adapteur au moyen du mot CSCW indique à l'IOC à quelle adresse en mémoire 10 commencer à obtenir ou à charger les données. Une fois démarrée l'opération se poursuit jusqu'à ce que l'adapteur signale à l'IOC qu'il doit s'arrêter.

La procédure d'échange des données entre l'IOC et l'adapteur est la même que pour une opération PIO sauf pour le dernier transfert.

Si le dernier transfert est un transfert d'un demi-mot, l'adapteur excite la ligne «fin de chaîne» EOC au lieu de VH.

Si le dernier transfert est un transfert de multiplet, vers ou en provenance d'un adapteur traitant des demi-mots, l'adapteur excitera la ligne modificateur M et multiplet valide VB.

Lorsque l'IOC reconnaît EOC ou VB et M il termine TD (étiquette données). L'adapteur reconnaît la fin de TD et supprime les données dans le cas d'une opération de lecture et termine EOC ou VB et M.

Une extinction se produit dans l'interface IOC lorsqu'un adapteur ne répond pas (dans les 60 microsecondes) à l'excitation ou à la désexcitation de l'une quelconque des cinq étiquettes d'interface VB; VH, EOC, IRR et M. Ceci provoque l'acheminement de la suite de l'opération en envoyant l'étiquette HALT aux adapteurs et une opération de vérification de l'IOC est réalisée.

Puisque, en réalité, comme représenté sur la figure 1, il y a deux IOC1 et 2, qui sont indépendants l'un de l'autre, chaque IOC a deux lignes: vol de cycle demande, vol de cycle accordé, CSG et CRS, à savoir CSGH et CSRM et CSRL, M signifiant priorité haute et L significant priorité basse.

On va maintenant montrer comment on peut réaliser le partage du temps conformément au procédé de la présente invention pour les utilisateurs réalisant des opérations longues: utilisateur (interfaces IOC1 et IOC2) pour les opérations AIO et utilisateur 1 (programme) pour les instructions IOH et IOHI.

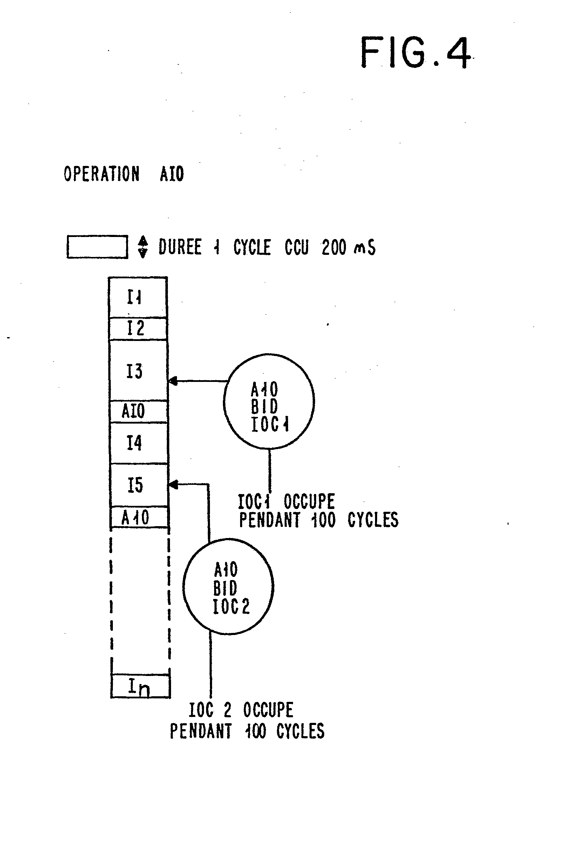

Supposons, que l'unité de contrôle exécute une séquence d'instructions I1; I2, . . ., In, comme re-présenté schématiquement sur la figure 4. Un cycle CCU dure une unité de temps (environ 200 ns), on peut donc voir que l'exécution des différentes instructions qui sont traitées en un nombre plus ou moins grand de cycles, prend un temps variable. Si au cours de l'exécution d'une de ces instructions par exemple I3, l'interface IOC1 pré-sente un appel BID IOC1 pour une opération AIO, l'instruction 3 est terminée d'exécuter, et le cycle suivant de l'unité CCU est affecté au transfert des données qui sont prêtes puisque l'appel ne se produit qu'une fois que les protocoles de préparation des données sont achevés, comme on peut le voir dans la description d'une opération AIO. Ensuite l'interface IOC1 reste occupée pendant 100 cycles CCU, pour que les protocoles d'achèvement de l'opération puisse avoir lieu. Dans le cas d'une lecture, c'est-à-dire d'un transfert de données depuis la mémoire, par le CCU à l'adapteur, l'interface IOC attend un signal indiquant que le transfert est terminé et dans le cas d'une opération d'écriture c'est-à-dire d'un transfert de données depuis l'adapteur, au travers du CCU à la mémoire l'interface envoie un signal d'accusé de réception, terminant l'opération.

Pendant ces cent cycles CCU, l'interface IOC1 est occupée, mais l'unité de commande peut être utilisée pour l'exécution d'autres instructions I4, I5 et un BID IOC2 pour une autre opération AIO peut être présentée par la seconde interface IOC2. De la même façon que précédemment, un cycle CCU sera alloué à cette opération à la fin du trai-tement de l'instruction I5, et l'interface IOC2 sera occupée pendant cent cycles CCU.

En ce qui concerne les instructions de type IOH et IOHI, lorsqu'elles sont décodées alors que l'adapteur impliqué est occupé, ces instructions sont mises en attente et tous les autres utilisateurs peuvent être sélectionnés sauf:

· le programme au niveau de l'instruction IOH

· le système de maintenance MS 5 et l'interface IOC attaché au bus occupé.

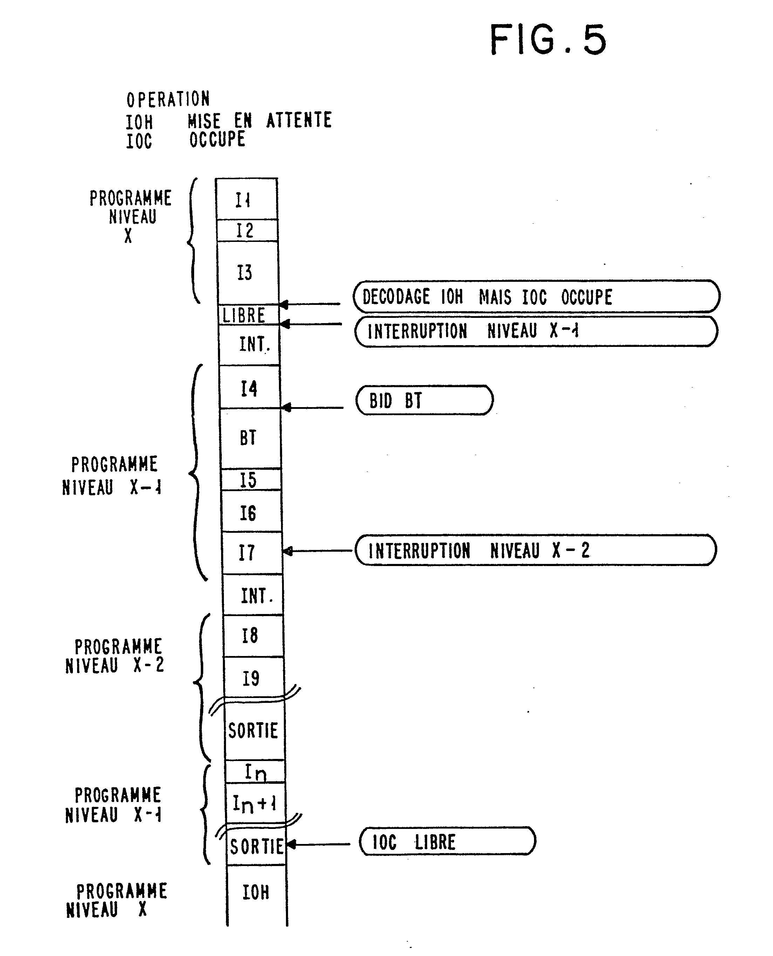

Ceci est représenté schématiquement sur la figure 5. Des instructions I1, I2, I3 sont exécutées au niveau X. A la fin de l'exécution de I3, une ins-truction IOH ou IOHI est décodée mais l'interface IOC correspondante est occupée. Cette instruction est alors mise en attente, tant que l'interface est occupée et ne sera traitée que lorsque l'interface deviendra libre. Pendant cet intervalle le programme peut se dérouler·à d'autres niveaux plus prioritaires sur la figure X-1 X-2 et d'autres utilisateurs peuvent être servis, par exemple le système peut répondre à un appel du mécanisme d'établissement de la table des branchements BT à des appels du mécanisme d'interruption.

Lorsque l'interface devient libre, l'instruction IOH ou IOHI commence sa première phase d'exécution. Ensuite lorsque la réponse de l'adapteur est reçue, la seconde phase de l'exécution a lieu. Entre les deux phases, tous les autres utilisateurs peuvent être sélectionnés sauf les suivants:

· Programme

· Mécanisme d'interruption

· Système de maintenance MS 5, et l'interface maintenant occupée.

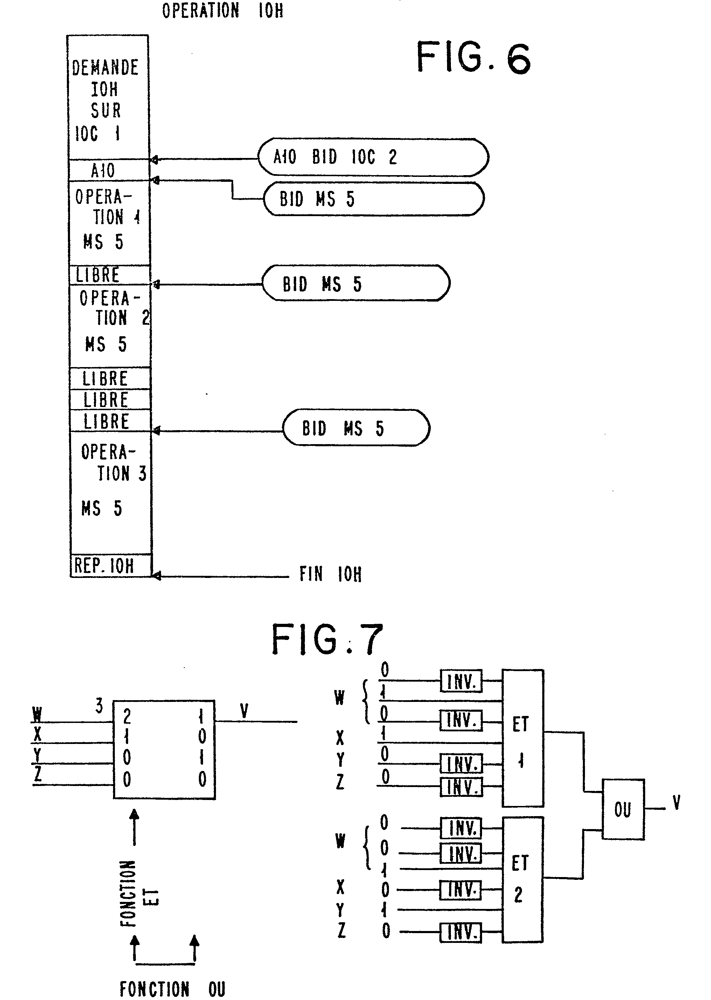

Ceci est représenté schématiquement sur la figure 6.

Le circuit 35 de la présente invention génère suite aux différents appels à la mémoire venant des utilisateurs et en tenant compte de ce concept de partage du temps entre les opérations longues, des signaux de sélection.

SEL. 1      Sélection programme
SEL. 2-1    Sélection IOC-1
SEL. 2-2    Sélection IOC-2
SEL. 3      Sélection interruption
SEL. 4      Sélection MS 5
SEL. 5      Sélection mécanisme NT
SEL. 6      Sélection mécanisme BTW

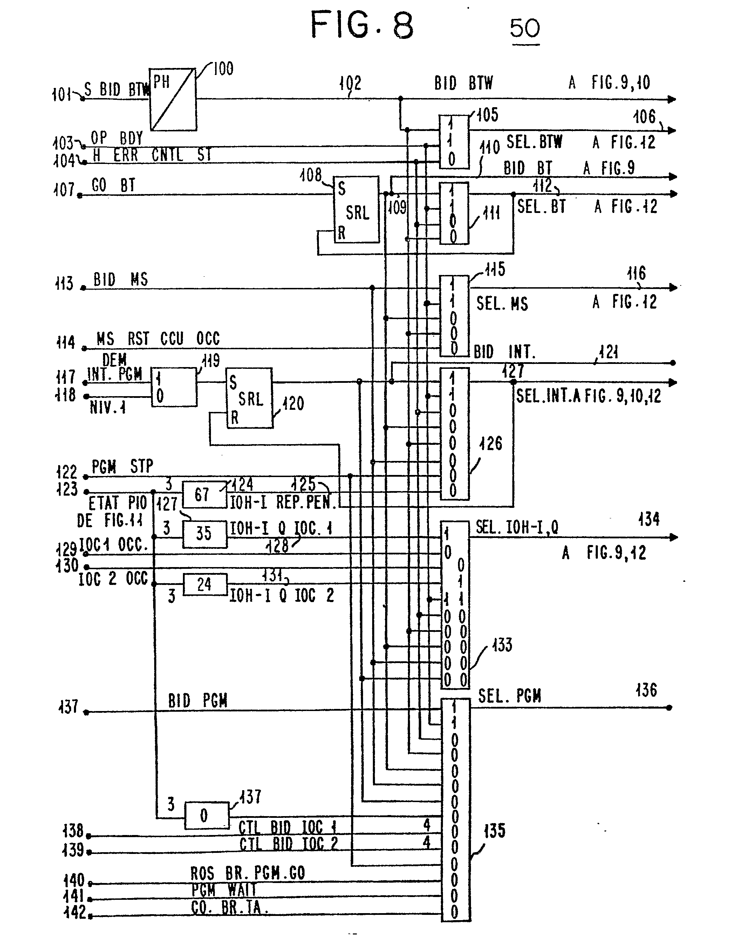

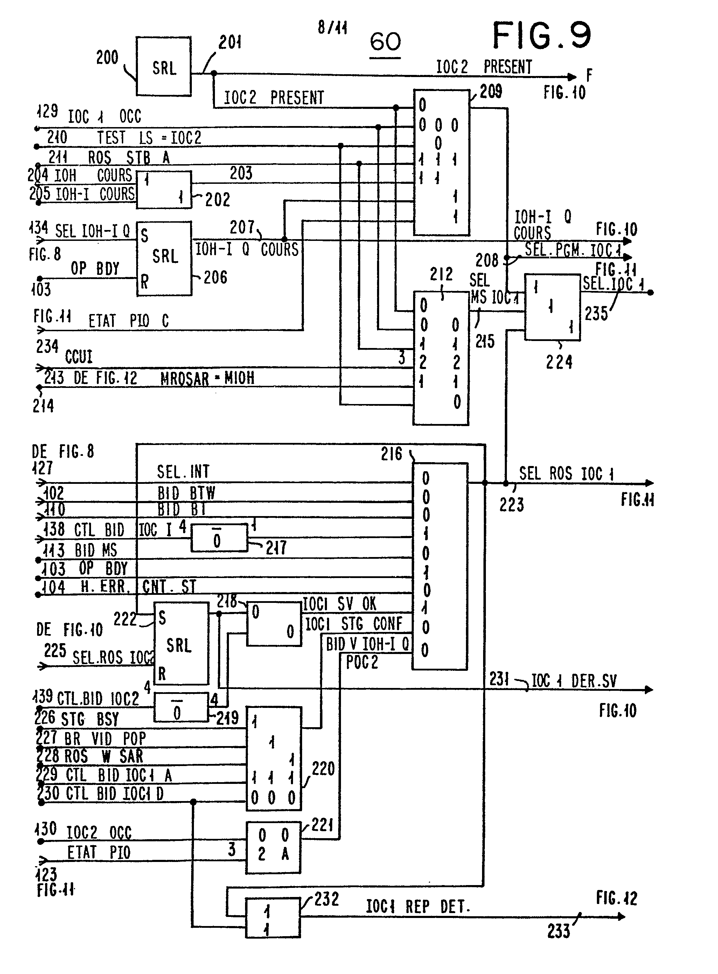

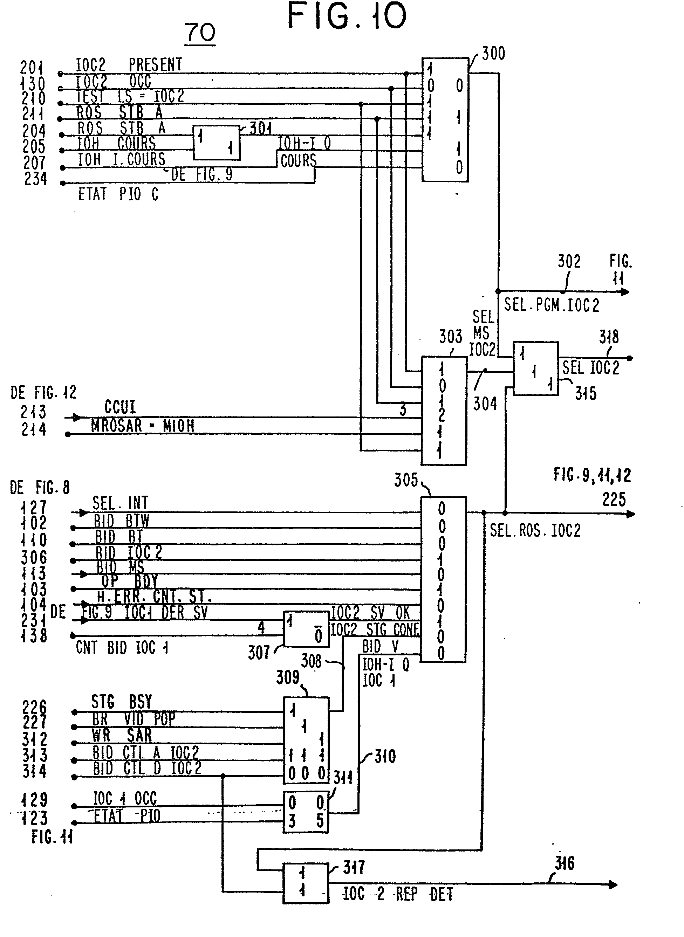

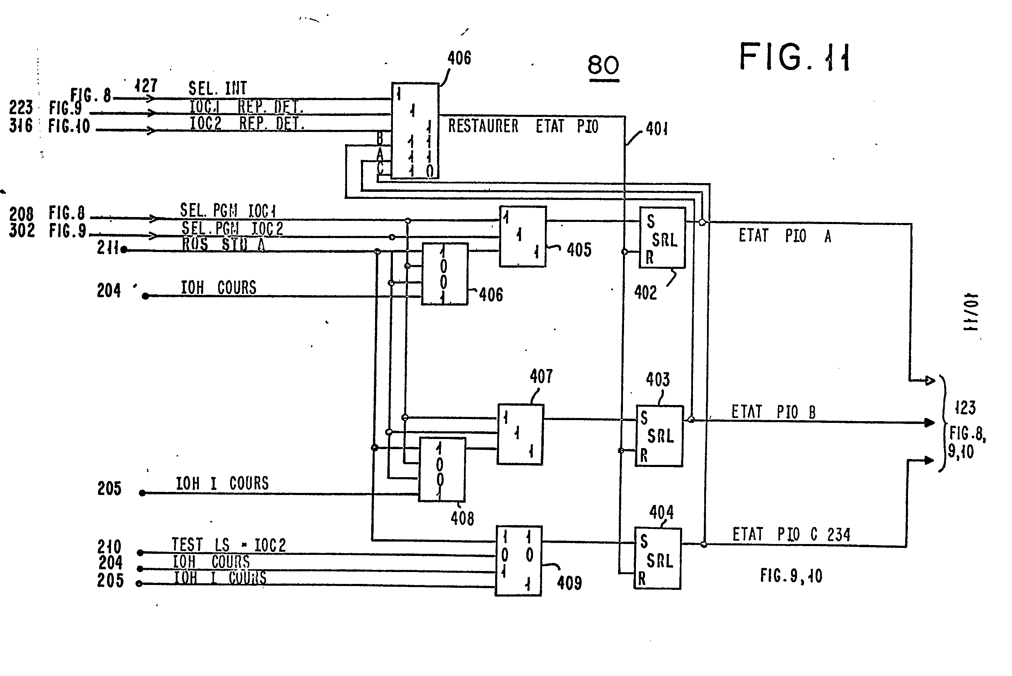

Le mécanisme de la présente invention est constitué par un ensemble logique qui est représenté en détail sur les figures 8 à 12.

Afin de simplifier la représentation de l'ensemble on a utilisé sur ces figures le symbolisme de la figure 7. Un bloc logique, tel que représenté sur cette figure, réalise une fonction logique de signaux d'entrée W, X, Y, Z. Il fournit un signal actif sur sa sortie V, quand les signaux d'entrée ont les valeurs représentées dans la colonne gauche ou les valeurs représentées dans les autres colonnes.

Le nombre entre parenthèses sur une ligne par exemple (3) à côté de W indique qu'en fait il y a trois lignes d'entrée et la valeur 2 sur l'entrée correspondante indique que les signaux décodés donnent la valeur 2, par exemple s'il y a trois lignes d'entrée, la valeur des signaux sur ces lignes sera 010. Partant de ces conventions il est très facile pour l'homme de l'art de réaliser le circuit logique correspondant. On a représenté sur la figure 7, le schéma logique équivalent. Dans le cas où il y a deux colonnes, deux portes ET, ET 1 er ET 2 sont conditionnées lorsque les conditions d'entrée représentées par les deux colonnes sont remplies, c'est-à-dire des inverseurs INV sont placés sur les entrées qui doivent être à zéro. Les sorties des portes ET 1 er ET 2 sont appliquées à un circuit OU qui fournit le signal de sortie V.

Le dispositif de la présente invention est composé de cinq circuits 50, 60, 70, 80, 90. Le premier cicuit 50 représenté sur la figure 8, permet de générer les signaux de sélection sauf ceux concernant les interfaces IOC.

Il comprend un circuit de maintient de polarité 100 qui reçoit sur son entrée 101 la commande S.BID BTW, pour établir l'appel BTW, en conséquence, le signal BID BTW est fourni en sortie sur la ligne 102.

Ce signal en même temps que les signaux OP BDY, sur la ligne 103 et H. ERR. CNTL. ST. sur la ligne 104, sont appliqués au bloc logique 105 qui fournit en sortie, ligne 106, le signal SEL BTW. Ce circuit 105 ne comporte en fait qu'un circuit ET qui est conditionné lorsque les signaux d'entrée ont les valeurs suivantes: ligne 102: 1, ligne 103: 1, ligne 104: 0.

Le signal GO BT est appliqué par la ligne 107 à une bascule SRL 108 avec une entrée de déclenchement S et une entrée de restauration R. La sortie 109 qui est active quand le signal GO BT est présent constitue le signal d'appel BID BT sur la ligne 110.

Un circuit logique 111 conditionné lorsque sa configuration de signaux d'entrée est 1100, reçoit, le signal de la ligne 109, le signal OP BDY, ligne 103; et le signal H. ERR CNT. ST. ligne 104 et le signal de la ligne 102 BID BTW, il fournit en sortie ligne 112 le signal SEL BT.

La ligne 113 reçoit le signal d'appel du système de maintenance BID MS et la ligne 114 le signal MS RST CCU OCC. Le bloc logique 115 qui est actif lorsque sa configuration d'entrée est 11000, reçoit les signaux BID MS, OP BDY, BID BT, BID BTW et MS RST CCU OCC respectivement, des lignes 113, 103, 109 et 114, il fournit sur la ligne 116 le signal SEL MS.

Les deux conditions DEM. INT. PGM et NIV. 1 sur les lignes 117 et 118 sont appliqués au circuit logique 110 qui est conditionné lorsque la configuration de signaux d'entrée est 10. Il fournit en sortie le signal de déclenchement S à une bascule SRL 120. Lorsqu'elle est déclenchée, cette bascule fournit le signal de demande d'interruption BID INT en 121. La ligne 122 reçoit l'information de commande PGM STP.

De la figure 11 arrive sur la ligne 123 une information d'état des opérations d'entrée/sortie PIO. Cette information comporte trois bits qui sont appliqués à un circuit logique qui est conditionné lorsque la valeur binaire des entrées correspond aux valeurs décimales 6 ou 7, il fournit en sortie un signal indiquant que la réponse à une opération IOH ou IOH(I) est en attente IOH-I REP. PEN. Le circuit logique 126 conditionné lorsque la configuration des signaux d'entrée est 11000000 reçoit les signaux BID INT., OP BDY, H ERR CNTL ST., BID BT, BID BTW, BID MS, PGM STP et IOH-I REP. PEN. sur les lignes 121, 103, 104, 110, 102, 113, 122 et 125 respectivement. Il fournit le signal sur la ligne 127 SEL. INT.

Un circuit logique 144 reçoit de la ligne 123 l'information d'état PIO à trois bits, il fournit une sortie indiquant que l'opération IOH ou IOH(I) relative à l'interface IOC1 est mise en attente, signal IOH-I Q IOC1 sur la ligne 128. La condition pour que ce signal soit actif est que les trois bits d'ETAT PIO soit O11 ou 101.

Les informations IOC1 OCC et IOC2 OCC indiquant que les interfaces sont occupées, sont fournies sur les lignes 129 et 130.

L'information indiquant que l'instruction IOH ou IOH(I) relative à l'interface IOC2 est mise en attente: IOH-1 Q IOC2, ligne 131, est dérivée de l'information d'état PIO par le circuit 132, qui fournit un signal actif sur la ligne 131 si les bits ETAT PIO sont 010 ou 100.

Le circuit logique 133 fournit le signal de sortie de sélection SEL. IOH-I Q sur la ligne 134 lorsque les conditions d'entrée 10. . 100000 ou . . 01100000 sont satisfaites, les . indiquant que l'état sur l'entrée correspondante n'a pas d'importance. Les entrées sont IOH-I Q IOC1 (ligne 128), IOC1 OCC (ligne 129), IOC2 OCC (ligne 130) IOH-I Q IOC2 (ligne 131), OP BDY (ligne 103), H. ERR. CNTL. ST (ligne 104), BID BTW (ligne 102), BID BT (ligne 110), BID MS (ligne 113), BID INT (ligne 121).

Le dernier circuit logique 135 fournit sur sa sortie le signal de sélection de l'utilisateur 1, programme: SEL PGM sur la ligne 13. Ce signal est actif si la configuration des signaux d'entrée est 11000000000000. Ces signaux d'entrée sont BID PGM ligne 137, OP BDY ligne 103, H. ERR. CNTL. ST ligne 104, BID BTW ligne 102, BID BT ligne 110, BID MS ligne 113, BID INT 121, information d'ETAT PIO = 000 fourni par le circuit 137, CTL BID IOC1 ligne 138, CTL BID IOC2 ligne 139 qui sont des signaux de commande des appels des interfaces IOC1 et IOC2, signal PGM STP ligne 122, signal ROS BP PGM GO ligne 140, signal PGM WAIT ligne 141, signal CO BR TA ligne 142.

Les points (.) à l'extrémité des lignes indiquent que les lignes viennent ou vont à l'extérieur, les signes < qu'elles viennent d'une ou de plusieurs autres figures et les signes > qu'elles vont vers une ou plusieurs autres figures.

Toutes les figures 8 à 12 étant en fait reliées entre elles, on va décrire chacune d'elle avant de faire la description du fonctionnement.

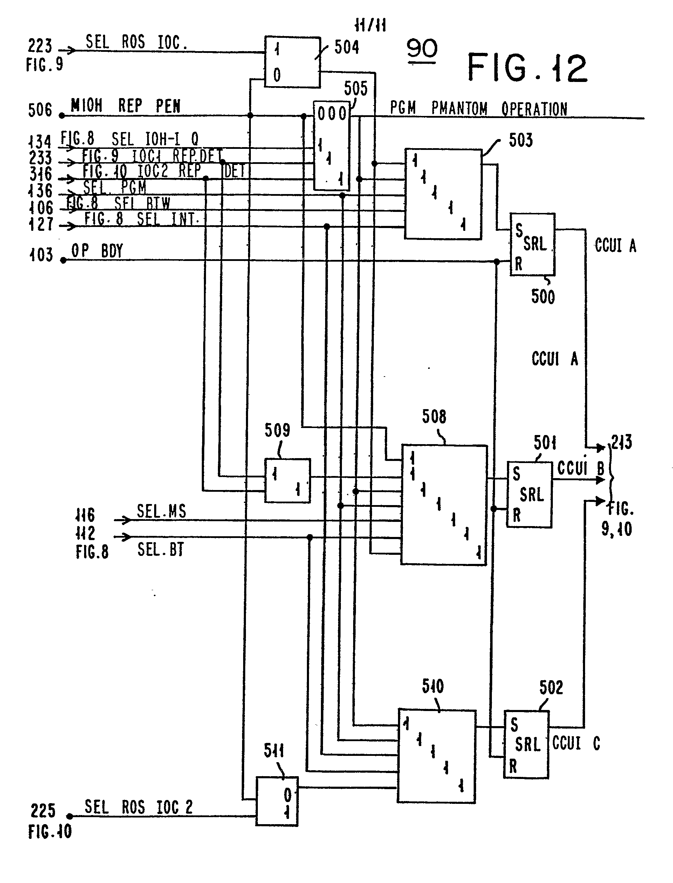

La figure 9 représente le circuit 60, permettant de générer le signal de sélection de l'IOC1.

Une bascule SRL fournit l'indication qu'une interface IOC2 est présente ou non dans la configuration du contrôleur. En effet, on peut imaginer que dans une configuration de machine où le nombre de ligne n'est trop élevé, il n'y ait qu'une interface IOC1 par exemple, cette indication IOC2 PRESENT est fournie à la sortie 201 de la bascule.

Un circuit logique 202 fournit un signal actif en 203 lorsque l'un ou l'autre des signaux IOH COURS ou IOH-I COURS sur les lignes 204 et 205 indiquent qu'une opération IOH ou IOH(I) est en cours, est actif.

Une bascule SRL 206 est déclenchée par le signal SEL IOH-I Q (ligne 134 de la figure 8 et restauré par le signal OP BDY) fournit sur la ligne 207, l'indication IOH-I Q COURS indiquant qu'une opération IOH ou IOH(I) en attente est en cours.

Le signal SEL PGM IOC1 (ligne 208) de sélection du programme pour une opération sur l'interface IOC1 est généré par le circuit logique 209 à partir du signal IOC2 présent, ligne 201, IOC1 OCC ligne 129, signal TEST LS = IOC2 ligne 210 et ROS STBA ligne 211, signal sur la ligne 203, signal IOH-I Q COURS ligne 207 et BIT C de l'information d'état PIO. Les conditions nécessaires sont indiquées dans le bloc 209 conformément à la convention de la figure 7.

Un autre circuit logique 212 reçoit sur ses entrées le signal IOC2 PRESENT ligne 201, IOC1 OCC ligne 129, le signal ROS STB A ligne 211 un signal à trois bits CCUI ligne 213 qui est fourni par le circuit de la figure 12 et qui est un indicateur d'utilisateur de l'unité de commande CCU et un signal MROSAR = MIOH sur la ligne 214 indiquant qu'il s'agit d'une opération MIOH et le signal TEST LS = IOC2 ligne 210. Il fournit si les conditions indiquées sont satisfaites un signal de sélection du système de maintenance pour l'interface IOC1 SEL MS IOC1 sur la ligne 215.

Un ensemble comprenant les circuits logiques 216 à 221 et la bascule SRL 222 permet de générer le signal de sélection de la ROS pour l'interface IOC1, SEL ROS IOC1 sur la ligne 223, signal qui est utilisé par le circuit logique 224 pour générer le signal de sélection de l'interface IOC1, SEL. IOC1 sur sa sortie 235 si l'un ou l'autre des signaux SEL PGM IOC1 (ligne 208) ou SEL MS IOC1 (ligne 215) ou SEL ROS IOC1 (ligne 223) est présent.

L'ensemble logique de génération du signal SEL ROS IOC1 sur la ligne 223 traite les signaux: SEL INT ligne 127, BID BTW ligne 102, BID BT ligne 110, CTL BID IOC1 ligne 138, BID MS ligne 113, OP BDY ligne 103, H. ERR CNT ST ligne 104, SEL ROS IOC2, ligne 225, de sélection de la ROS pour l'interface IOC2 qui est généré sur le circuit de la figure 10 et qui restaure la bascule SRL 222 le signal CTL BID IOC2 ligne 139, le signal STG BSY ligne 226, BR VID POP ligne 227, signal d'écriture ROS W SAR ligne 228, IOC1 CTL BID A ligne 229 qui est le bit A du signal CTL BID IOC1 et CTL BID D IOC1 qui est le bit D de ce même signal, le signal IOC2 OCC ligne 130 et l'ETAT PIO ligne 123.

Le circuit 218 délivre un signal intermédiaire IOC1 SV OK indiquant qu'il est possible de servir l'interface IOC1. Le circuit 220 délivre un signal IOC1 STG CONF quand il y a un conflit pour la mémoire relatif à l'interface IOC1 et le circuit 221 un signal BID V IOH-I Q IOC2 quand il y a une demande valable pour une instruction IOH-I en attente relative à l'interface IOC2.

Le signal à la sortie de la bascule 222 IOC1 DER SV indique que l'interface IOC1 a été la dernière servie.

Le circuit 232 génère à partir de l'information SEL ROS IOC1 sur la ligne 223 et de l'information CTL BID D IOC1 le signal IOC1 REP DET indiquant que la réponse de l'interface IOC1 est détectée.

Les conditions pour que le circuit 209 soit conditionné sont 00.11. . ou . 0011. . ou .0.1.11 avec comme entrée IOC2 PRESENT (201), IOC1 OCC (129) TEST LS = IOC2 (210) IOH COURS OU IOH-I COURS (203), IOH-I Q COURS (207) ETAT PIO C.

Les conditions pour que le circuit 212 soit conditionné sont 00121. ou .01210 avec comme entrées IOC2 PRESENT (201) IOC1 OCC (129) ROS STB A (211), CCU I (213) trois bits MROSAR = MIOH (214), TEST LS = IOC2.

La condition pour que le circuit 216 soit conditionné est 0001010100, avec comme entrées correspondantes SEL INT (127), BID BTW (102), BIT BT (110) CTL BID IOC1 de 217, OP BDY (103) H. ERR. CTN. STOP (104) IOC1 SV OK de 218, IOC1 STG CONF de 220, BID V IOH-1 Q IOC2 de 221.

IOC1 STG CONF est généré par le circuit 220 qui est conditionné par les entrées 1. .10, .1.10, . .110 correspondant à STG BSY (226), BR VID POP (227), ROS W SAR (228), CTL BID A IOC1 (229), CTL BID DIOC1 (230).

BID V IOH-I IOC2 est généré par le circuit 221 conditionné par les entrées 02 ou 04 correspondant à IOC2 OCC (130), ETAT PIO (123).

Le signal de sélection SEL IOC2 est généré par l'ensemble logique 70 de la figure 10.

Il comprend un bloc logique 300 conditionné par les configurations d'entrée 10111. . ou .0.1.10 correspondant aux signaux d'entrée IOC2 PRESENT (201), IOC2 OCC (130), TEST LS = IOC2 (210), ROS STB A (211) IOH COURS (204) ou IOH-I COURS (205) fourni par la logique 301, IOH-1 Q COURS (207) et ETAT PIO C (234) généré par le circuit de la figure 11.

Le circuit 300 fournit le signal SEL PGM IOC2 sur la ligne 302, signal qui est utilisé par le circuit de la figure 11 pour générer l'information ETAT PIO.

Le bloc logique 303 est conditionné par la configuration d'entrée 101211 correspondant aux signaux d'entrée, IOC2 PRESENT (201), IOC2 OCC (130) ROS STB A (211), indicateur d'utilisateur CCU (213), généré par le circuit de la figure 12, M ROSAR = MIOH, et TEST LS = IOC2 (210). Il génère le signal SEL MS IOC2.

Le circuit 305 conditionné par la configuration d'entrée 0001010100, correspondant aux signaux SEL INT 127, BID BTW (102), BID BT (110), BID IOC2 (306), BID MS (113), OP BDY 103, H. ERR. CNT. ST. (104), IOC2 SV OK venant du circuit logique 307 indiquant que l'interface IOC2 peut être servi, et IOC2 STG CONF. indiquant qu'il y a un conflit mémoire pour IOC2 (308 venant du circuit logique 309) et BID V IOH-I Q IOC1 indiquant qu'il y a un appel valide IOH ou IOH(I) en attente pour l'interface IOC1 (ligne 310 venant du circuit logique 311). Ce circuit 305 génère le signal de sélection de la ROS pour IOC2 SEL ROS IOC2 ligne 225, qui est utilisé par les circuits des figures 9, 11 et 12.

Le circuit 309 est conditionné par la configuration d'entrée 1..10, ou .1.10 ou ..110 correspondant aux signaux d'entrée: STG BSY (226), BR VID POP (227), WR SAR d'écriture du registre SAR (312), BID CTL A IOC2 (313); BID CTL D IOC2 (314).

La logique 311 est conditionnée par les configurations d'entrée 03 ou 05 correspondant aux entrées IOC1 OCC (129) et ETAT PIO 123.

Le signal de sélection de l'IOC2 (318) est généré par la logique 315 qui est conditionnée par les configurations d'entrée 1.. ou .1. ou ..1 correspondant aux entrées SEL PGM IOC2 (302), SEL MS IOC2 (304), SEL ROS IOC2 (225).

Le signal IOC2 REQ DET ligne 316, qui indique que la réponse de l'IOC2 a été détectée est généré par la logique 317 qui est conditionnée par la configuration d'entrée 11 correspondant aux signaux d'entrée SEL ROS IOC2 (225) et BID CTL D IOC2 (314).

La figure 11 représente le circuit 80 pour générer les informations d'état ETAT PIO, cette information comporte trois bits PIO A, PIO B, PIO C, qui indique l'état des opérations adapteurs défini par le contrôle de l'unité CCU en fonction des appels (BID) et des opérations déjà exécutée, de la façon suivante:

| PIO | | | |
|-----|---|---|---|
| A | B | C | |
| 0 | 0 | 0 | LIBRE |
| 0 | 1 | 0 | IOH I 2 Q<br>opération IOH I pour l'interface I OC2 en attente |
| 0 | 1 | 1 | IOH I Q<br>opération IOH I pour l'interface IOC1 en attente |
| 1 | 0 | 0 | IOH 2 Q<br>opération IOH pour l'interface IOC2 en attente |
| 1 | 0 | 1 | IOH 1 Q<br>opération IOH pour l'interface IOC1 en attente |
| 1 | 1 | 0 | IOH ou IOH I REP PEN<br>pour interface IOC2 réponse en attente |
| 1 | 1 | 1 | IOH ou IOH I REP PEN<br>pour interface IOC1 réponse en attente |

Le circuit comprend un circuit logique 400 pour générer le signal de restauration de l'état PIO 401 qui est appliqué à l'entrée de restauration de trois bascules SRL 402, 403 et 414 dont les sorties fournissent les trois bits PIO A, PIO B et PIO C respectivement. Ces trois lignes de sortie constituent le bus 123 utilisé dans les figures 8, 9 et 10. Le circuit 400 est conditionné par les configurations d'entrée 1.... ou .1.111, ou ..1110 qui correspondent aux signaux SEL INT ligne 127 de la figure 8, IOC1 REP DET ligne 223 de la figure 9, IOC2 REP DET ligne 316 de la figure 10 et bits B, A, C de l'information ETAT PIO prise aux sorties des bascules 403, 402 et 404 respectivement.

La bascule 402 est déclenchée pour mettre à «1» le bit A de l'information d'ETAT PIO par les circuits logiques 405 et 406. Le circuit 406 est conditionné par la configuration d'entrée 1001 correspondant aux signaux d'entrée ROS STB A (211) SEL PGM IOC1 (208, figure 8), SEL PGM IOC2 (302, figure 9) et IOH COURS (204). Le circuit 405 est conditionné par les configurations d'entrée 1.. ou .1. ou ..1 qui correspondent aux signaux d'entrée SEL PGM IOC1 (208, figure 8), SEL PGM IOC2 (302, figure 9) et sortie de 406.

La bascule 403 est déclenchée pour mettre à 1 le bit B de l'information d'état P10 par les circuits logiques 407, 408. Le circuit 408 est conditionné par la configuration d'entrée 1001 qui correspond aux signaux d'entrée ROS STB A (211), SEL PGM IOC1 (208, figure 8), SEL PGM IOC2 (302, figure 9) et IOH-I COURS (205) et la bascule 403 est déclenchée par la sortie du circuit 407 qui est conditionné par les configurations d'entrée 1.. ou .1. ou ..1 qui correspondent aux entrées, SEL PGM IOC1 (208) SEL PGM IOC2 (302), et sortie de 408.

La bascule 404 est déclenchée par le circuit logique 409 qui est conditionné par la configuration d'entrée 101. ou 10.1 correspondant aux entrées ROS STB A (211), TEST LS IOC2 (210), IOH COURS 204 et IOH I COURS 205.

L'indicateur d'utilisateur CCUI à trois bits CCUI A, B, C est généré par le circuit 90 de la figure 12. Les trois bits A, B, C de cet indicateur sont générés par les bascules 500, 501, 502, qui sont restaurées par le signal de limite d'opération OP BDY (103).

La première bascule est enclenchée par la sortie d'un bloc logique 503 qui est conditionné si la sortie du circuit 504, ou la sortie du circuit 505, ou le signal SEL PGM (136), ou le signal SEL BTW (106) ou le signal SEL INT (127) est à 1.

Le circuit 505 est conditionné par les configurations d'entrée 01.. ou 0.1. ou 0..1 correspondant aux entrées MIOH REP PEN. (réponse à une opération MIOH en cours), SEL IOH-I Q (134), IOC1 REP DET (233) et IOC2 REP DET (316).

Quant au circuit 504, il est conditionné par la configuration d'entrée 10 correspondant aux entrées SEL ROS IOC1 (223) et MIOH REP PEN (506).

La bascule 501 est enclenchée par la sortie de la logique 508 qui est conditionnée par les configurations d'entrée 11 . . . . . ou . .1 . . . . ou . . .1 . . . ou . . . .1 . . ou . . . . .1. ou . . . . .1 qui correspondent aux entrées MIOH REP PEN (506), sortie du circuit logique 509, sortie de 505, SEL PGM (136), SEL MS (116), SEL BT (112) et sortie de 504. La logique 509 est conditionnée lorsqu'il y a un signal 1 IOC1 REP DET ou un signal 1 IOC2 REP DET indiquant que la réponse de l'un ou l'autre IOC1 ou IOC2 a été détectée.

La bascule 502 est enclenchée par la sortie de la logique 510 qui est conditionnée quand la sortie de 505 ou SEL PGM (136) ou SEL INT (127) ou SEL BT (112) ou sortie 511 sont à «1». Le circuit 511 est conditionné quand MIOH REP PEN (506) est à zéro et SEL ROS IOC2 (225) est à «1».

On va maintenant décrire le fonctionnement de l'ensemble des figures 8 à 12.

Un appel BID est une demande de sélection et le signal SEL est un signal de sélection. Si, il est à «1», il autorise la sélection de l'utilisateur correspondant, par exemple si le signal SEL BTW est à «1», la sélection de l'utilisateur BTW est autorisée.

Dans une machine chaque opération CCU est ininterruptible, cela veut dire que chaque appel BID ne peut être pris en compte qu'à la frontière d'une opération, marquée par le signal OP BDY.

En référence à la figure 8, on peut voir que le signal SEL BTW à la sortie de 105 qui est le signal de sélection de l'utilisateur qui à la priorité la plus élevée est à «1» si le signal marquant la frontière d'une opération est présent s'il n'y a pas d'erreur matérielle et s'il y a un appel pour cet utilisateur.

Sur le schéma on peut voir facilement les conditions nécessaires pour mettre à «1» le signal de sélection de l'utilisateur BT à la sortie de 112, à savoir: le signal marquant la frontière d'une opération est présent, il n'y a pas d'erreur matérielle, il n'y a pas d'appel BID BTW de priorité supérieure et il y a un appel pour cet utilisateur BID BT.

Le signal de sélection du système de maintenance SEL MS à la sortie de 115 est à «1», si, le signal marquant la frontière d'une opération OP BDY est à «1», s'il n'y a pas d'appels de priorités supérieures BID BTW et BID BT s'il n'y a pas de condition MS RST CCU OCC qui est comme on l'a dit précédemment un signal envoyé par le système MS qui annule une opération MS précédente dans l'unité CCU, il y a un BID MS.

Le signal de sélection du mécanisme d'interruption SEL INT à la sortie de 127 est à «1» à la frontière d'une opération OP BDY à «1», s'il n'y a pas d'erreur matérielle, s'il n'y a pas d'appels de priorités supérieures: BID BTW, BID BT, BID MS si on n'est pas en mode arrêt programme si on n'est pas en attente de réponse d'un adaptateur et s'il y a un appel BID INT.

La génération de ces quatre premiers signaux est relativement simple.

Avant de passer à l'explication de la génération des autres signaux de sélection on va faire un rappel des phases des opérations résultant des appels des utilisateurs, dans le cas des instructions IOH ou IOH1, MIOH ou AIO.

Pour une instruction IOH ou IOHI, un appel programme PGM BID provoque une sélection du programme PGM SEL avec génération de l'adresse de ROS pour exécuter l'instruction IOH ou IOHI. Dans le deuxième mot de commande fourni par la ROS, on a une indication ROS STROBE A: ROSSTBA qui entraîne soit une sélection de l'IOC (phase de demande) ou une mise en attente de l'instruction IOH-I Q si l'IOC est occupé. Ensuite un appel de l'IOC, BID IOC provoque une sélection de la ROS et une sélection de l'IOC (phase de réponse).

Succession des opérations pour une instruction IOH ou IOHI.

```
PGM ──→ PGM ──→ ¹ROS ¹    ROS      ¦
BID       SEL      ¹CW1 ¹   CW2      ¦
            ¦         ¦      ¦   STB A ¦──→SEL  IOC (Phase demande)
            ¦                        ¦         ( IOC libre)
            ¦                        ¦
            ¦                        ¦──→IOH–I Q̰
                                           (ḬOC occupé)
  ¦─────────────────────────────────────────!
  ¦
 _BID IOC    ┌──→ SEL ROS
             │
             └──→ SEL IOC (Phase réponse)
```

La sélection d'une opération IOH ou IOH I en attente. (IOH-I Q) nécessite une sélection du programme PGM SEL avec génération de l'adresse ROS pour exécuter l'instruction IOH. On peut accéder à la ROS et dans le deuxième mot de commande on a une indication ROS STROBE A: ROS STB A qui participe à la sélection de l'interface IOC correspondant:

```
              ! PGM ! ROS !          !
         ,  ⊢ ! SEL  ! CW1 !  CW2   !
SEL. !        !      !     !  STB A  !
IOH-I Q                              !
                                     !
                                     ↓
                        SEL_IOC
```

On a représenté sur le schéma suivant les opérations de sélection qui se produisent suivant les utilisateurs et les opérations qu'il demande.

| BIDS utilisateurs | OPERA-TION | Première Sélection | Deuxième Sélection |
|---|---|---|---|
| PGM IOH-I Q | IOH, IOH | Sélection ROS | Sélection IOC |
| MS | MIOH | Sélection ROS | Sélection IOC |
| IOC | AIO Réponse: IOH IOHI MIOH | Sélection ROS Sélection ROS | |

Le signal SEL IOH-I Q ligne 134 figure 8 est actif:

· à la frontière d'une opération OP BDY à 1, lorsqu'il n'y a pas d'erreur matérielle ligne 104 à «0», pas d'appel de priorités supérieures: BID BTW, BID BT, BID MS, BIT INT à 0, c'est un bid IOH-I Q pour l'interface IOC1 qui n'est pas occupée IOC1 OCC à 0, et IOH-I Q IOC1 à 1 (cette information est dérivée de l'état PIO 011 ou 101), c'est un BID IOH-I Q pour l'IOC2 qui n'est pas occupée. IOC 2 OCC à 0 et IOH-I Q IOC2 à 1 (information dérivée de l'état P10 010 ou 100).

Le signal de sélection du programme SEL PGM ligne 136 figure 8 est actif, s'il y a un appel BID PGM à 1 à la frontière d'une opération OP BDY à 1, s'il n'y a pas d'erreur matérielle H. ERR CNTL ST (104) à 0, pas d'appel plus prioritaire BID BTW, BID BT, BID MS, BID INT à 0, ETAT PIO à 0. En effet, si ETAT PIO =110 ou 111 cela indique qu'une réponse est attendue et qu'en conséquence l'exécution du programme n'est pas autorisée, si ETAT PIO est à 010, 011 ou 100 ou 101 c'est-à-dire IOH ou IOHI en attente pour l'interface IOC1 ou IOC2, il n'y a pas eu d'interruption (sinon l'état PIO aurait été remis à zéro) et l'exécution du programme dans ce niveau n'est pas autorisée. De plus il n'y a pas d'appels IOC prioritaires, c'est-à-dire que les signaux CTL BID IOC1 et CTL BID IOC2 sont à zéro, pas d'arrêt de programme et d'attente de programme PGM ST et PGM WAIT à zéro, pas de ROS BR PGM GO et CO BR TA qui sont des conditions montrant que le contenu des registres POP n'est pas bon du fait du branchement et que l'appel BID PGM venant du mécanisme de recherche IPF ne peut être considéré.

Les appels BID IOC ont les formats suivants:

| Bit A | Bit B | Bit C | Bit D | |
|---|---|---|---|---|
| 0 | 0 | 0 | 0 | Pas d'appel |
| 0 | 0 | 1 | 0 | Appels pour des opérations CCU |
| 0 | 1 | 0 | 0 | |
| 0 | 1 | 1 | 0 | |
| 1 | 0 | 1 | 0 | Appels pour des opérations avec la mémoire principale (AIO) |
| 1 | 0 | 0 | 0 | |
| 1 | 1 | 1 | 0 | |
| 1 | 1 | 0 | 0 | |
| 0 | 0 | 0 | 1 | Appels pour réponse à des instructions IOH ou IOHI ou MIOH |
| 1 | 0 | 0 | 1 | |
| 1 | 0 | 1 | 1 | |

Avant de passer à la description de la génération des signaux de sélection pour les IOC1 et IOC2 on va donner le format de l'indicateur d'utilisateurs du CCU qui est nécessaire pour l'obtention des signaux de sélection IOC1 et IOC2.

Le format de cet indicateur CCUI est le suivant:

| Bit A | Bit B | Bit C | |
|---|---|---|---|
| 0 | 0 | 0 | Libre |
| 0 | 0 | 1 | IOC2 pour une opération AIO |
| 0 | 1 | 0 | MS |
| 0 | 1 | 1 | BT |
| 1 | 0 | 0 | BTW |
| 1 | 0 | 1 | INT |
| 1 | 1 | 0 | IOC1 pour une opération AIO |
| 1 | 1 | 1 | Programme, réponse IOH ou IOHI |

Cet indicateur est généré par le circuit de la figure 12 qui sera décrit par la suite.

La sélection de l'interface IOC1 signal actif en 224 résulte de plusieurs conditions.

La première de ces conditions (condition 1 pour IOC1) est qu'il y a une sélection de l'IOC1 pour l'exécution du programme, SEL PGM IOC1. Ce signal est actif s'il y a une opération IOH ou IOH-I en cours, sortie 202 à 1, si le signal ROS STB A nécessaire à la sélection de l'interface est présent, si l'IOC1 est concerné, c'est-à-dire soit LSIOC2 n'est pas présent, soit le test TEST LS =IOC2 montre que l'opération n'est pas destinée à l'IOC2, ligne 210 à 0 et si l'interface IOC1 est libre, c'est-à-dire IOC1 OCC =0.

Ce signal est aussi actif s'il y a une opération IOH-I Q en cours, ligne 207 à 1 et que le signal ROS STBA est à 1, le fait que cette opération concerne l'IOC1 est signalé par le bit C de l'information d'ETAT PIO qui est à 1.

En conséquence le circuit 209 délivre un signal SEL PGM IOC1 sur la ligne 208.

La deuxième condition (condition 2 pour IOC1) est qu'il y ait un signal SEL MS IOC1 pour sélectionner l'interface IOC1 pour une opération avec le système de maintenance. Cela signifie qu'il y a en cours une opération MIOH (c'est-à-dire l'indicateur CCU est à 010 et le décodage du registre MROSAR indique qu'il s'agit d'une opération MIOH) au troisième cycle ROS STB A à 1 et l'IOC1 est concerné (soit IOC2 plus présent, soit TEST LS = IOC2 = 0 indiquant que l'IOC2 n'est pas concerné. En conséquence le signal SEL MS IOC1 à la sortie de 212 est actif.

La troisième condition (condition 3 pour IOC1) est qu'il y ait un signal ROS IOC1 à la sortie de 216, ce qui signifie qu'on est à la frontière d'une opération OP BDY à 1, pas d'erreur matérielle H. ERR CNT ST à 0, pas d'appels plus prioritaires BID BTW, BID BT, BID MS, BID INT, pzd de BID valable pour une opération IOH-I Q destiné à l'IOC2, BID V IOH-I Q IOC2 = 0. L'IOC1 a présenté un appel quelconque CTL BID IOC1 pas 0 à la sortie de 217, l'IOC1 a priorité sur l'IOC2, ce qui est le cas lorsqu'il n'y a pas d'appel en cours pour l'IOC2 CTL BID IOC2 égal à zéro, ou que l'IOC2 a été le dernier servi (bascule SRL 222 est restaurée). De plus il ne faut pas qu'il y ait de conflit pour l'utilisation de la mémoire c'est-à-dire qu'il n'y ait pas d'appel BID IOC pour la mémoire (IOC1 STG CONF à 0 à la sortie de 220) ou que, s'il y a un appel BOIOC pour la mémoire (BIDA = 1, BIDD = 0), la mémoire n'est pas occupée (STG BUSY) ou ne deviendra pas occupée durant le cycle suivant (PR VID POP OU ROS W SAR).

Le signal indiquant que la réponse de l'interface IOC1 est détectée IOC1 REP DET ligne 223 est actif quand l'IOC1 présente un appel de réponse indiqué par le bit D du CTL BID IOC1 et que le signal SEL ROS IOC1 est actif.

Le circuit pour la génération du signal de sélection pour l'IOC2 représenté sur la figure 10 est identique au circuit de la figure 9.

La condition 1 pour IOC2 est qu'il y ait un signal SEL PCM IOC2 à la sortie 302 de 300, la condition 2 pour IOC2 est qu'il y ait un signal SEL MS IOC2 à la sortie de 303 et la condition 3 pour IOC2 est qu'il y ait un signal SEL ROS IOC2.

Les circuits 300, 303 et 305 qui génèrent ces trois signaux sont conditionnés par des configurations d'entrée qui concernent l'interface IOC2 et non plus IOC1.

Par exemple pour que le circuit 300 soit conditionné il faut qu'il y ait un signal IOC2 PRESENT, que IOC2 ne soit pas occupé, que le test LS montre que l'interface IOC2 est concerné, qu'il y ait le ROS STB A et qu'une opération IOH ou IOHI soit en cours ou bien que l'IOC2 n'étant pas occupé, le signal ROS STB A étant présent qu'il y ait une opération IOH-I Q en cours qui concerne l'interface IOC2, cette dernière condition est indiquée par le bit C de l'ETAT PIO à zéro.

Pour la condition 2 IOC2 le circuit 303 est conditionné s'il y a en cours une opération MIOH au troisième cycle ROS STB A à «1» qui concerne l'interface IOC2 (IOC2 présent, IOC2 non occupé TEST LS = IOC2).

Le circuit 305 qui génère la condition 3 pour l'IOC2 a la même configuration d'entrée que le circuit 216 de la figure 9 mais les signaux d'entrée concernent l'interface IOC2 au lieu d'IOC1. Il n'est donc pas nécessaire d'en décrire plus en détail le fonctionnement.

Le circuit générant l'information d'ETAT PIO se compose de trois bascules dont les conditions de déclenchement et de restauration sont définies de la façon suivante de façon à réaliser le diagramme d'état qui sera donné après la description de ces conditions.

Le bit A de l'ETAT PIO est fourni par la bascule 402 qui est déclenchée par:

[1]: SEL PGM IOC1 ou SEL PGM IOC2, ce qui signifie qu'il y a une opération IOH ou IOHI ou IOH-I Q en cours pour l'interface IOC1 ou IOC2, donc que le signal ROS STB A est à «1» et que l'interface n'est pas occupé.

[2]: opération IOH en cours, ROS STB A = 1, IOC occupé ce qui entraîne un état IOH Q.

Ces deux conditions sont établies par les circuits 405 et 406.

Le bit B est mis à 1 à la sortie de la bascule 403, par les circuits 407 et 408 qui établissent les conditions suivantes:

[3]: SEL PGM IOC1 ou SEL PGM IOC2 ce qui signifie qu'une opération IOH, IOHI ou IOH-I Q est en cours pour les interfaces IOC1 ou IOC2, ROS STB A = 1 et l'interface IOC n'est pas occupé.

[4]: IOHI en cours, ROS STB A = 1 et IOC occupé ce qui entraîne un état de mise en attente de l'opération: IOHI soit IOHI Q.

Le bit C est mis à 1 à la sortie de la bascule 404 par le circuit 409 qui établit la condition suivante:

[5]: IOH ou IOHI en cours, ROS STB A = 1 avec l'interface IOC1 ce qui entraîne, soit un état de mise en attente de l'instruction IOH ou IOHI soit IOH-I Q, soit un état d'attente de réponse REP PEN.

La restauration des trois bascules est identique, elle a lieu quand:

[6] l'interruption est sélectionnée SEL INT à 1, c'est le cas de l'operation IOH-I Q avec interruption. Il laisser s'exécuter le programme sur le nouveau niveau:

[7]: on est dans l'état REP PEN et la réponse a été détectée, ce qui signifie que l'opération est terminée.

DIAGRAMME D'ETAT

PIO

```
ABC        ABC        ABC        ABC        ABC        ABC        ABC
000        010        011        100        101        110        111

LIBRE      IOHI2 Q    IOHI1 Q    IOH2 Q     IOH1 Q     IOH-I2     IOH-I1
                                                       REP PEN    REP PEN

(0)        (2)        (3)        (4)        (5)        (6)        (7)
 !          !          !          !          !          !          !
 !   [4]    !          !          !          !     [1]  !          !
 !          ----------!-IOC2--LIBRE --------!---------->          !
 !-IOHI --> !          !          !          ! [3]  [1] !          !
 !          !          !          !        -IOC2-LIBRE-------->    !
 !          !      [5] !          !          !          !          !
 !   -IOHI-IOC1-OCC ---->!        !          !          !          !
 !          !          ! -IOC1-LIBRE --------.---------!--------->[1] !
 !          !          !    [2]   !          !          ! [3]  [1] !
 !-IOH-IOC2-OCC ------!--------->!          ! -IOC1-LIBRE ------>  !
 !          !          !          !          !          !          !
 !          !          !          ! [5]  [2] !          !          !
 !-IOH-IOC1-OCC -- ----!------------------->!          !          !
 !          !          !          !          ! [3]  [1] !          !
 !-IOH ou  IOHI-IOC2-LIBRE  ----------------------------->!        !
 !          !          !          !          !          !          !
 !          !          !          !          !          ! [5] [3] [1] !
 !-IOH ou  IOHI-IOC1-LIBRE  ------------------------------------->!  !
 !          !          !          !          !          !          !

 !          !          !          !          !          !          !
 !<---------!----------!----REP IOC2--------!----------!--------!   !
 !          !          !          !          !          !       !   !
 !<---------!----------!---REP IOC1---------!----------!--------!---!
 !          !          !          !          !          !          !
 !<-int-NT- .          !          !          !          !          !
 !          !          !          !          !          !          !
 !<-int-NIV1 ---------- !          !          !          !          !
 !          !          !          !          !          !          !
 !<-int-NIV1----------!----------!          !          !          !
 !          !          !          !          !          !          !
 !<-int-NIV1---------!----------!--------- !          !          !
 !          !          !          !          !          !          !
 !          !          !          !          !          !          !
```

<div style="columns:2">

L'indicateur d'utilisateur de l'unité de commande CCUI comporte aussi trois bits ABC qui sont mis à 1 lorsque les bascules 500, 501 et 502 de la figure 12 sont déclenchées.

Le bit A qui lorsqu'il est à «1» indique que les utilisateurs sont: BTW, INT, IOC1 pour une opération AIO, PGM et REP IOH-I, est mis à «1» lorsque les signaux suivants sont à «1»:

SEL PGM, SEL BTW, SEL INT, SEL IOH-I Q, IOC2 REP DET ou IOC2 REP DET (sans MIOH REP PEND) et SEL ROS IOC1 sans MIOH REP PEN ce qui signifie que l'utilisateur est IOC1 pour une opération AIO.

Le bit B qui lorsqu'il est à «1» indique que les utilisateurs sont MS, BT, IOC1 pour une opération AIO, PGM, REP IOH-I, est mis à «1» lorsque les signaux suivants sont à «1»:

SEL PGM, SEL BT, SEL MS, SEL ROS, IOC1 sans MIOH REP PEN, IOC1 ou IOC2 REP DET, SEL IOH-I Q.

Le bit C qui lorsqu'il est à «1» indique que les utilisateurs sont IOC2 AIO, BT, INT, PGM, RE-PONSE IOH-I, est mis à «1» lorsque les signaux suivants sont à «1».

SEL PGM, SEL INT, SEL BT, SEL ROS IOC2 sans réponse MIOH indiquant qu'il s'agit d'une opération AOI pour l'interface IOC2, SEL IOH-I

</div>

Q, ou IOC1 ou IOC2 REP DET sans réponse MIOH.

Les trois bascules sont restaurées par le signal de frontière d'opération OP BDY puisque l'indicateur représente les utilisateurs pendant toute la durée d'une opération.

Les circuits que l'on vient de décrire permettent donc de sélectionner un utilisateur en fonction des priorités attribuées à leurs appels (BID) en tenant compte de l'impératif qu'une suite de cycles CCU pour une opération ne peut être interrompue. Une opération IOH ou IOHI avec une des interfaces peut avoir deux états: mise en attente si l'interface est occupée, en attente de réponse REP PEN si l'interface n'est pas occupée mais que l'opération n'est pas terminée, ce qui signifie qu'une série de mots de ROS a été exécuté mais qu'une autre série sera exécutée plus tard. Dans le cas où c'est une instruction IOH qui est mise en attente tous les autres appels peuvent être sélectés sauf le programme au niveau dans lequel l'instruction IOH a commencé et sauf le système de maintenance MS et une opération AIO impliquant l'interface occupée.

Dans le cas où l'instruction IOH est dans l'état d'attente de réponse REP PEN tous les autres appels peuvent être sélectés sauf le programme, le mécanisme d'interruption et une opération MIOH ou AIO impliquant l'interface occupée.

Dans le cas où l'opération MIOH est mise en attente ou dans l'état d'attente de réponse REP PEN, tous les autres appels peuvent être sélectés sauf le système de maintenance MS, le programme pour une opération IOH ou IOHI et une opération AIO impliquant l'interface occupée.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

## Revendications

1. Procédé pour attribuer au moins une ressource commune d'une unité de commande centrale à programme emmagasiné exécutant les instructions dudit programme par cycles, à plusieurs utilisateurs internes à l'unité ou utilisateurs externes d'entrée/sortie auxquels sont connectés des adaptateurs, chacun pouvant communiquer avec l'unité de commande par des opérations initialisées par programme de type (PIO) ou par des opérations initialisées par les adaptateurs (de type AIO), dans lequel un ordre de priorité est affecté à tous les utilisateurs, ledit procédé comprenant la réception de tous les appels desdits utilisateurs (BID) demandant que la ressource de l'unité de commande centrale leur soit attribuée et la génération d'un signal de sélection (SEL) indiquant à quel utilisateur ayant fait un appel, la ressource devrait être attribuée en fonction de sa priorité, et l'affectation d'un cycle de l'unité de commande à l'utilisateur externe lorsque le signal de sélection indique que la ressource doit lui être attribuée, si ledit utilisateur avait fait un appel pour une opération initialisée par un adaptateur (de type AIO), cet utilisateur restant ensuite occupé pendant plusieurs cycles pour achever cette opération, cycles au cours desquels tous les autres utilisateurs peuvent être sélectionnés et étant caractérisé en ce qu'il comprend:

l'enregistrement (état PIO) de l'appel de l'utilisateur interne pour lequel le signal de sélection indique que la ressource devrait lui être attribuée, lorsque cet utilisateur nécessite d'avoir accès pour une opération initialisé par programme (de type PIO) à un utilisateur externe pris comme ressource qui est occupé afin que cet appel soit mis en attente et la génération pendant le temps où cet utilisateur externe reste occupé de signaux de selection indiquant à quel autre utilisateur la ressource pourrait être attribuée, l'appel enregistré et mis en attente étant présenté avec les appels des autres utilisateurs pour pouvoir être sélectionné lorsque l'utilisateur externe devient libre.

2. Procédé selon la revendication 1 caractérisé en ce que la ressource commune est la mémoire morte contrôlant l'unité de commande centrale dans laquelle sont emmagasinés des mots de commande qui sont accédés suite au décodage de chaque instruction à exécuter pour en commander l'exécution.

3. Dispositif pour mettre en œuvre le procédé selon la revendication 1 ou 2 caractérisé en ce qu'il comprend:

des moyens d'enregistrement pour enregistrer les appels mis en attente (fig. 11, 80) et fournir des signaux indiquant qu'au moins un appel est mis en attente,

des moyens de sélection d'utilisateurs internes (fig. 2, 50) ayant des entrées de conditionnement recevant les appels (BID) des utilisateurs internes, les signaux fournis par les moyens d'enregistrement, et un signal indiquant que les utilisateurs externes sont libres ou occupés afin de générer sur une de leurs lignes de sortie (SEL), un signal qui est actif pour affecter la ressource commune à un des utilisateurs en fonction de son ordre de priorité parmi tous les utilisateurs,

des moyens de sélection d'utilisateurs externes (fig. 9, 10: 60, 70) pour générer un signal de sélection pour un utilisateur externe comprenant:

un circuit OU (fig. 9: 224) ayant au moins deux entrées et une sortie, la sortie étant active si une des entrées reçoit un signal indiquant qu'il y a une instruction d'entrée/sortie commandant une opération initialisée par programme (PIO) en cours (203) et que l'utilisateur concerné est libre ou qu'une instruction d'entrée/sortie commandant une opération initialisée par programme (PIO) est en attente (207) qui concerne cet utilisateur alors libre; ou si l'autre entrée reçoit un signal indiquant que l'utilisateur a présenté un appel (138) pour recevoir une réponse à une instruction d'entrée/sortie commandant une opération initialisée par programme (PIO) ou pour une opération initialisée par lui-même et qu'il n'y a pas d'appels d'utilisateurs plus prioritaires.

4. Dispositif selon la revendication 3 caractérisé en ce que les utilisateurs internes comprennent:

des mécanismes de contrôle du déroulement du programme (BTW, BT) un mécanisme d'interruption du programme (INT), un système de maintenance MS, le programme PGM et les utilisateurs externes comprennent au moins une interface d'entrée/sortie (IOC) permettant à l'unité de commande centrale de communiquer avec les adapteurs.

5. Dispositif selon la revendication 4 caractérisé en ce que les appels des mécanismes de contrôle ont la priorité la plus élevée, et le programme la priorité la moins élevée.

6. Dispositif selon l'une quelconque des revendications précédentes 3 à 5, caractérisé en ce qu'il comprend un circuit (80) recevant les signaux de sélection pour générer une information d'état des opérations d'entrée/sortie initialisées par programme PIO ayant une configuration à plusieurs bits indiquant l'état des opérations PIO, la configuration de bits indiquant qu'un appel est mis en attente étant appliqués au moyen de sélections d'utilisateurs internes.

7. Dispositif selon l'une quelconque des revendications 4 à 6 caractérisé en ce qu'il comprend un circuit (90) pour générer un indicateur d'utilisateur (CCUI), qui reçoit les signaux de sélection pour générer en sortie une configuration à plusieurs bits identifiant l'utilisateur sélectionné.

**Patentansprüche**

1. Verfahren, um die Benutzung von mindestens einem gemeinsamen Betriebsteil einer mittels eines gespeicherten Programms betriebenen Zentralsteuereinheit, die zyklischerweise die Befehle dieses Programms ausführt, mehreren innerhalb der Zentralsteuereinheit eingeschlossenen Benutzern oder ausserhalb der Zentralsteuereinheit und damit mittels Anschlusseinrichtungen verbundenen Ein-/Ausgabe-Benutzern zu gewähren, wobei jede Anschlusseinrichtung mit der Steuereinheit, durch von einem Programm des Typs (PIO) initialisierte Prozessen oder durch von den Anschlusseinrichtungen (des Typs AIO) initialisierte Prozessen bedingt, zum Informationsaustausch verbindbar ist, wo eine Priorität jeweils den einzelnen Benutzern gegeben ist, wobei das Verfahren für die Aufnahme aller aus den Benutzern (BID) stammenden Anforderungen zur Benutzung des Betriebsteils der Zentralsteuereinheit und für die Erzeugung eines Auswahlsignals (SEL) sorgt, welches angibt, welchem Benutzer Zugang zu dem Betriebsteil in Abhängigkeit von der Priorität gegeben sein sollte, wobei das Verfahren auch dafür sorgt, dem externen Benutzer einen Betriebszyklus der Zentralsteuereinheit dem externen Benutzer zu gewähren, wenn das Auswahlsignal angibt, dass der Betriebsteil von diesem Benutzer benutzt werden soll, wenn der Benutzer eine Anforderung für einen von der Anschlusseinheit (des Typs AIO) initialisierten Prozess ausgegeben hat, wobei dieser Benutzer anschliessend während mehrerer Zyklen zur Beendigung dieses Prozesses besetzt ist, wo während dieser Zyklen alle andere Benutzer ausgewählt werden können, dadurch gekennzeichnet, dass das Verfahren aufweist:

die Erfassung (Zustand PIO) der Anforderung aus dem internen Benutzer, für den das Auswahlsignal angibt, dass der Betriebsteil von ihm benutzt werden sollte, wenn dieser Benutzer hinsichtlich eines von dem Programm (des Typs PIO) initialisierten Prozesses Zugang zu einem externen Benutzer erfordert, wo dieser externe Benutzer als Betriebsteil gilt und besetzt ist, so dass diese Anforderung anstehend bleibt,

und bei dieser Zeit, wenn der externe Benutzer besetzt ist, die Erzeugung von Auswahlsignalen, welche angeben, von welchem anderen Benutzer der Betriebsteil benutzt werden sollte, wobei die so erfasste und anstehende Anforderung mit den Anforderungen aus den anderen Benutzern zusammenfällt, so dass er ausgewählt werden kann, wenn der externe Benutzer frei wird.

2. Verfahren nach Anspruch 1, dadurch gekennzeichnet, dass der gemeinsame Betriebsteil der zur Steuerung der Zentralsteuereinheit vorgesehene Festwertspeicher ist, wo in der Steuereinheit die Steuerwörter gespeichert sind, zu den Zugang anschliessend der Dekodierung jedes auszuführenden Befehles zur Steuerung dessen Ausführung erfolgt.

3. Vorrichtung zur Durchführung des Verfahrens nach Anspruch 1 oder 2, dadurch gekennzeichnet, dass sie einschliesst:

Erfassungsmittel zur Erfassung der anstehenden Anforderungen (Fig. 11, 80) und zur Lieferung von Signalen, welche angeben, dass mindestens eine Anforderung ansteht,

Mittel zur Auswahl der internen Benutzer (Fig. 2, 50) mit Bereitstellungseingängen zur Aufnahme der Anforderungen (BID) aus den internen Benutzern, der von den Erfassungsmitteln gelieferten Signale und auch eines Signals, welches angibt, dass die externen Benutzer entweder frei oder besetzt sind, um einer deren Ausgangsleitung (SEL) ein aktives Signal zuzuführen, das die Benutzung des gemeinsamen Betriebsteils einem der Benutzer in Abhängigkeit von seiner Priorität aus den anderen Benutzern gewährt,

Mitteln zur Auswahl der externen Benutzer (Fig. 9, 10; 60, 70) zur Erzeugung eines Auswahlsignals für einen externen Benutzer, welche Mittel einschliessen:

eine ODER-Verknüpfungsschaltung (Fig. 9; 224) mit mindestens zwei Eingängen und einem Ausgang, wobei der Ausgang aktiv ist, wenn einem dieser Eingänge ein Signal zugeführt ist, welches angibt, dass ein Ein-/Ausgabe-Befehl zur Steuerung eines von dem Programm (PIO) initialisierten Prozesses in der Abwicklungsphase sich befindet (203) und der betreffende Benutzer frei ist, oder dass ein Ein-/Ausgabe-Befehl zur Steuerung eines von dem Programm (PIO) initialisierten Prozess ansteht (207); oder wenn dem anderen Eingang ein Signal zugeführt ist, welches angibt, dass der Benutzer eine Anforderung (138), um eine Antwort auf einen Ein-/Ausgabe-Befehl für die Steuerung eines von dem Programm (PIO) initialisierten Prozesses zu bekommen, oder für einen von ihm selbst initialisierten Prozess ausgegeben hat, und dass keine Anforderung mit einer höheren Priorität vorliegt.

4. Vorrichtung nach Anspruch 3, dadurch gekennzeichnet, dass die internen Benutzer einschliessen:

Prozeduren für die Steuerung der Programmabwicklung (BWT, BT), eine Prozedur für die Programmunterbrechung (INT), ein Wartungssystem MS, ein Programm PGM,

und die externen Benutzer mindestens eine Ein-/Ausgabe-Schnittstelle (IOC) einschliessen, die den Informationsaustausch zwischen der Zentralsteuereinheit und den Anschlusseinrichtungen ermöglichen.

5. Vorrichtung nach Anspruch 4, dadurch gekennzeichnet, dass die Anforderungen der Steuerprozeduren die höhere Priorität haben und das Programm die geringste Priorität hat.

6. Vorrichtung nach einem der vorhergehenden Ansprüche 3 bis 5, dadurch gekennzeichnet, dass sie eine Schaltung (80), der die Auswahlsignale zugeführt sind, zur Erzeugung einer den Zustand der von dem Programm PIO initialisierten Ein-/Ausgabe-Prozessen betreffenden Information mit einer Konfiguration von den Zustand der PIO-Prozessen angebenden Mehrbits einschliesst, wobei den Mitteln zur Auswahl der internen Benutzer diese Bits-Konfiguration zugeführt ist, welche angibt, dass eine Anforderung anstehend bleibt.

7. Vorrichtung nach einem der Ansprüche 4 bis 6, dadurch gekennzeichnet, dass sie eine Schaltung (90) zur Erzeugung eines Benutzer-Kennzeichners (CCUI) einschliesst, dem die Auswahlsignale zugeführt sind, so dass sie an dessen Ausgang eine den ausgewählten Benutzer identifizierende Mehrbits-Konfiguration gibt.

## Claims

1. Process for assigning at least one common resource of a stored program central control unit which executes cyclically the instructions of said program, to a plurality of internal users or input/output external users to which input/output adapters are connected, each user being able to communicate with the central control unit through program initiated operations (PIO) or adapter initiated operations (AIO), a priority order being assigned to each user, said process comprising the reception of all the bids from said users requesting the assignment of the resource of the central control unit and the generation of a selection signal (SEL) indicating at which user having a bid pending, the resource should be assigned according to its priority order and the assignment of one cycle of the control unit to an external user when the select signal indicates that the resource should be assigned to it, if the bid of said user requested an adapter initiated operation (AIO), said user remaining busy for several cycles for the completion of said operation, during which cycles the other users can be selected, said process being characterized in that it comprises:

the recording (PIO status) of the internal user bid for which the select signal indicates that resource should be assigned to it, when said internal user requires to have access for a program initiated operation (PIO) to an external user taken as a resource which is busy in order this bid be queued, and the generation during the time this external user remains busy, of select signals indicating at which other user the common resource could be assigned, said recorded bid being placed in competition with the bids from the other users to be selected when the ecternal user becomes free.

2. A process according to claim 1 characterized in that the common resource is the read only memory controlling the central control unit, said memory containing control words accessed through the decoding of each instruction to be executed for controlling the execution of said instruction.

3. Device for implementing the process according to any one of claims 1 or 2, characterized in that it comprises:

means for recording the queued bids (Fig. 11, 80) and providing signals indicating that at least one bid is queued,

means for selecting the internal users (Fig. 2, 50), said means having set inputs receiving the internal user bids, the signals provided by the recording means and a signal indicating whether the external users are free or busy for generating on one of their output lines (SEL) a signal which is active for assigning the common resource to one of the users according to its priority order among the other users,

means for selecting the external users (Fig. 9, 10; 60, 70) for generating a signal for selecting an external user, said means comprising:

an OR circuit (Fig. 9; 224) having at least two inputs and one output, said output being active if one of the inputs receives a signal indicating that there is an input/output instruction controlling a program initiated operation (PIO) whose execution is in progress (203) and the related user is free or that an input/output instruction controlling a program initiated operation (PIO) is recorded (207), this instruction relating an external user which is then free; or if the other input receives a signal indicating that a user has sent a bid (138) to receive a response to an input/output instruction controlling a program initiated operation (PIO) or for an operation initiated by itself and that there is no user bids from users having a higher priority.

4. Device according to claim 3, characterized in that the internal users comprise:

program trace control mechanisms (BTW, BT), a program interrupt mechanism (INT), a maintenance system (MS), the program (PGM) and the external users comprise at least one input/output interface (IOC) used by the central control unit to communicate with the adapters.

5. Device according to claim 4, characterized in that the bids from the control mechanisms have the highest priority and the bids from the program have the lowest priority.

6. Device according to any one of claims 3 to 5, characterized in that it comprises a circuit (80) receiving the selection signals for generating a status information relative to the program initiated input/output operations (PIO), said information being a pattern comprising a plurality of bits indicating the status of the PIO operations, the pattern indicating that a bid is queued being provided to the means for selecting the internal users.

7. Device according to any one of claims 4 to 6 characterized in that it comprises a circuit (90) for generating a user indicator (CCUI), said circuit receives the selection signals for generating on its output, a pattern having a plurality of bits which indicates the selected user.

FIG. 1

FIG.2

FIG.3

0 059 293
2/11

COMMAND MEMOIRE 10
COMMAND CCU

# FIG.4

OPERATION AIO

⬜ ↕ DUREE 1 CYCLE CCU 200 mS

| I 1 |
| I 2 |
| I 3 |
| AIO |
| I 4 |
| I 5 |
| A 10 |

A 10
B 1 D
I O C 1

IOC1 OCCUPE
PENDANT 100 CYCLES

A 10
B 1 D
I O C 2

| In |

IOC 2 OCCUPE
PENDANT 100 CYCLES

# FIG.5

OPERATION
IOH    MISE EN ATTENTE
IOC    OCCUPE

PROGRAMME
NIVEAU
X

| I1 |
| I2 |
| I3 |
| LIBRE |
| INT. |

DECODAGE IOH MAIS IOC OCCUPE

INTERRUPTION NIVEAU X-1

PROGRAMME
NIVEAU X-1

| I4 |
| BT |
| I5 |
| I6 |
| I7 |
| INT. |

BID BT

INTERRUPTION NIVEAU X-2

PROGRAMME
NIVEAU X-2

| I8 |
| I9 |
| SORTIE |

PROGRAMME
NIVEAU X-1

| In |
| In+1 |
| SORTIE |

IOC LIBRE

PROGRAMME
NIVEAU X

| IOH |

OPERATION IOH

# FIG. 6

| |
|---|
| DEMANDE IOH SUR IOC 1 |
| A10 |
| OPERA- TION 1 MS 5 |
| LIBRE |
| OPERA- TION 2 MS 5 |
| LIBRE |
| LIBRE |
| LIBRE |
| OPERA- TION 3 MS 5 |
| REP. IOH |

A10 BID IOC 2

BID MS 5

BID MS 5

BID MS 5

FIN IOH

# FIG. 7

W 3
X
Y
Z

2 1 0 0 0 — V

1 0 1 0

FONCTION ET

FONCTION OU

W { 0 1 } INV. INV.
X 0 1 INV.
Y 0 INV.
Z 0 INV.

ET 1

W { 0 0 1 } INV. INV.
X 0 INV.
Y 1
Z 0 INV.

ET 2

OU — V

FIG.8    50

8/44  60  FIG.9

# FIG. 10

70

FIG. 11

FIG.12